Europäisches Patentamt

European Patent Office

Office européen des brevets

(19)

(11) **EP 1 277 346 B1**

(12) **EUROPÄISCHE PATENTSCHRIFT**

(45) Veröffentlichungstag und Bekanntmachung des Hinweises auf die Patenterteilung:
**17.09.2003 Patentblatt 2003/38**

(51) Int Cl.$^7$: **H04N 7/26**, H04N 7/30, G10L 19/14

(21) Anmeldenummer: **01905785.0**

(22) Anmeldetag: **16.02.2001**

(86) Internationale Anmeldenummer:
**PCT/EP01/01748**

(87) Internationale Veröffentlichungsnummer:
**WO 01/067773 (13.09.2001 Gazette 2001/37)**

(54) **Vorrichtung und Verfahren zum Analysieren der spektralen Darstellung eines decodierten Zeitsignales**

Device and method for analysing a spectral representation of a decoded time-variable signal

Dispositif et procédé pour l'analyse de la représentation spectrale d'un signal temporel décodé

(84) Benannte Vertragsstaaten:
**AT CH DE GB LI**

(30) Priorität: **06.03.2000 DE 10010849**

(43) Veröffentlichungstag der Anmeldung:
**22.01.2003 Patentblatt 2003/04**

(73) Patentinhaber: **Fraunhofer-Gesellschaft zur Förderung der angewandten Forschung e.V. 80636 München (DE)**

(72) Erfinder:
- **HERRE, Jürgen**
  **91054 Buckenhof (DE)**
- **DIETZ, Martin**
  **90429 Nürnberg (DE)**
- **SPORER, Thomas**
  **90766 Fürth (DE)**
- **SCHUG, Michael**
  **91056 Erlangen (DE)**
- **SCHILDBACH, Wolfgang**
  **Seattle, WA 98116 (US)**

(74) Vertreter: **Schoppe, Fritz, Dipl.-Ing. Patentanwälte Schoppe, Zimmermann, Stöckeler & Zinkler, Postfach 246 82043 Pullach bei München (DE)**

(56) Entgegenhaltungen:
**WO-A-99/04572          JP-A- 8 037 643**

- **BOSI M ET AL: "ISO/IEC MPEG-2 ADVANCED AUDIO CODING" JOURNAL OF THE AUDIO ENGINEERING SOCIETY,AUDIO ENGINEERING SOCIETY. NEW YORK,US, Bd. 45, Nr. 10, 1. Oktober 1997 (1997-10-01), Seiten 789-812, XP000730161 ISSN: 0004-7554**
- **CHEN Y ET AL: "Extracting coding parameters from pre-coded MPEG-2 video" PROCEEDINGS 1998 INTERNATIONAL CONFERENCE ON IMAGE PROCESSING. ICIP98 (CAT. NO.98CB36269), PROCEEDINGS OF IPCIP'98 INTERNATIONAL CONFERENCE ON IMAGE PROCESSING, CHICAGO, IL, USA, 4-7 OCT. 1998, Seiten 360-364 vol.2, XP002166941 1998, Los Alamitos, CA, USA, IEEE Comput. Soc, USA ISBN: 0-8186-8821-1**

**Beschreibung**

Die vorliegende Erfindung bezieht sich auf die Analyse von auf irgendeine Art codierten und wieder decodierten Signalen und insbesondere auf das Analysieren eines Analyse-Zeitsignals, das Audio- und/oder Videodaten umfaßt, das durch Codierung und Decodierung eines ursprünglichen Zeitsignals gemäß einem Codieralgorithmus erzeugt worden ist.

Es ist allgemein bekannt, Audio- und/oder Videosignale unter Verwendung eines bestimmten Codierverfahrens zu codieren, um eine codierte Version des ursprünglichen Zeitsignals zu erhalten, wobei sich die codierte Version des ursprünglichen Zeitsignals grundsätzlich dahingehend von dem ursprünglichen Zeitsignal unterscheiden sollte, daß die Datenmenge des codierten Signals kleiner als die Datenmenge des ursprünglichen Zeitsignals ist. In einem solchen Fall wird der Codieralgorithmus, um aus dem ursprünglichen zeitsignal das codierte Signal zu erhalten, und auch der Decodieralgorithmus, der im wesentlichen eine Umkehrung des Codieralgorithmus ist, als datenreduzierender Codieralgorithmus bezeichnet.

Zur Datenreduktion von Audiosignalen existieren verschiedene Codieralgorithmen, welche Gegenstand einer Reihe von internationalen Standards sind, wobei der Codieralgorithmus MPEG-2 AAC beispielsweise in dem internationalen Standard ISO/IEC 13818-7 detailliert beschrieben ist.

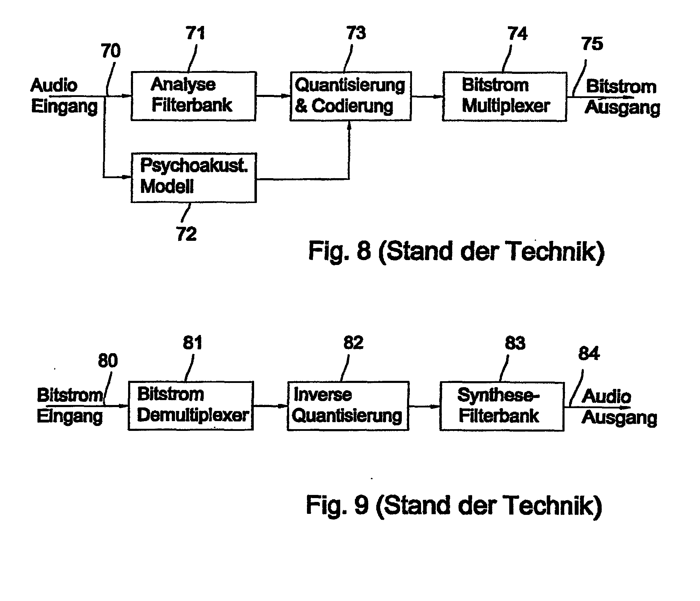

In nachfolgenden wird auf Fig. 8 Bezug genommen, welche ein Blockschaltbild eines MPEG-Audiocodierverfahrens zeigt. Ein solcher Audiocodierer umfaßt typischerweise einen Audioeingang 70, an dem ein Strom von zeitdiskreten Abtastwerten eingespeist wird, welche beispielsweise PCM-Abtastwerte sind, welche beispielsweise 16-Bitbreit sind. In einer Analysefilterbank 71 wird der Strom von zeitdiskreten Audio-Abtastwerten in Codierungsblöcke oder Frames von Abtastwerten eingeteilt, unter Verwendung einer entsprechenden Fensterfunktion gefenstert und dann in eine spektrale Darstellung beispielsweise durch eine Filterbank oder durch eine Fourier-Transformation oder eine Abart der Fourier-Transformation, wie z. B. eine modifizierte diskrete Cosinustransformation (MDCT), überführt. Am Ausgang der Analysefilterbank 71 liegen somit aufeinanderfolgende Codierungsblöcke oder Frames von Spektralkoeffizienten vor, wobei ein Block von Spektralkoeffizienten das Spektrum eines Codierungsblocks von Audioabtastwerten ist. Oft wird eine 50%ige Überlappung aufeinanderfolgender Codierungsblöcke verwendet, so daß pro Block ein Fenster von beispielsweise 2048 Audioabtastwerten betrachtet wird, und durch diese Verarbeitung 1024 neue Spektralkoeffizienten erzeugt werden.

Das zeitdiskrete Audiosignal am Eingang 70 wird ferner in ein psychoakustisches Modell 72 eingespeist, um eine Datenreduktion zu erreichen, derart, daß bekannterweise die Maskierungsschwelle des Audiosignals abhängig von der Frequenz berechnet wird, um in einem Block 73, der mit Quantisierung und Codierung bezeichnet ist, eine Quantisierung der Spektralkoeffizienten durchzuführen, welche von der Maskierungsschwelle abhängt.

Anders ausgedrückt wird die Quantisierung der Spektralkoeffizienten derart grob durchgeführt, daß das hierdurch eingeführte Quantisierungsrauschen noch unter der psychoakustischen Maskierungsschwelle, die durch das psychoakustische Modell 72 berechnet wird, liegt, so daß das Quantisierungsrauschen idealerweise unhörbar ist. Dieses Prozedere bewirkt, daß typischerweise eine bestimmte Anzahl von Spektralkoeffizienten, die am Ausgang der Analyse-Filterbank 71 noch ungleich 0 sind, nach dem Quantisieren zu 0 gesetzt werden, da das psychoakustische Modell 72 festgestellt hat, daß dieselben durch benachbarte Spektralkoeffizienten maskiert werden und deshalb unhörbar sind.

Nach dem Quantisieren liegt eine spektrale Darstellung des Codierungsblocks von zeitdiskreten Abtastwerten vor, in der das Quantisierungsrauschen möglichst unterhalb der psychoakustischen Maskierungsschwelle liegt. Diese datenreduzierend quantisierten Spektralwerte können anschließend abhängig vom verwendeten Codierer unter Verwendung einer Entropie-Codierung, welche z. B. eine Huffman-Codierung sein kann, verlustlos codiert werden. Dadurch wird ein Strom von Codewörtern erhalten, dem in einem Bitstrommultiplexer 74 noch von einem Decodierer benötigte Seiteninformationen hinzugefügt werden, wie z. B. Informationen bezüglich der Analyse-Filterbank, Informationen bezüglich der Quantisierung, wie z. B. Skalenfaktoren, oder aber Seiteninformationen bezüglich weiterer Funktionsblöcke. Solche weiteren Funktionsblöcke sind bei MPEG-2-AAC beispielsweise die TNS-Verarbeitung, die Intensity-Stereo-Verarbeitung, die Mitte/Seite-Stereoverarbeitung, oder aber eine Prädiktion von Spektrum zu Spektrum.

An einem Ausgang 75 des Codierers, der auch als Bitstromausgang bezeichnet wird, liegt dann das gemäß dem in Fig. 8 gezeigten Codieralgorithmus codierte Signal blockweise vor.

Im Falle des Decodierers wird das codierte Signal am Ausgang 75 des in Fig. 8 gezeigten Codierers in einen Bitstromeingang 80 eines in Fig. 9 gezeigten Decodierers eingespeist, welcher zunächst in einem Block 81, der als Bitstrom-Demultiplexer bezeichnet ist, eine Bitstrom-Demultiplex-Operation durchführt, um die Spektraldaten von den Seiteninformationen zu trennen. Am Ausgang des Blocks 81 liegen dann wieder die Codewörter vor, welche die einzelnen Spektralkoeffizienten darstellen. Unter Verwendung einer entsprechenden Tabelle werden die Codewörter decodiert, um quantisierte Spektralwerte zu erhalten. Diese quantisierten Spektralwerte werden dann in einem Block 82, der mit "Inverse Quantisierung" bezeichnet ist, verarbeitet, um die im Block 73 (Fig. 8) eingeführte Quantisierung rückzurechnen. Am Ausgang des Blocks 82 liegen dann wieder dequantisierte Spektralkoeffizienten vor, welche nun mittels einer Synthesefilterbank 83, die invers zur Analysefilterbank 71 (Fig. 8) arbeitet, in den Zeitbereich überführt werden, um an einem Audioausgang 84 das decodierte Signal zu erhalten.

Bei der Betrachtung des Codier/Decodier-Konzepts, das in den Fig. 8 und 9 dargestellt ist, wird deutlich, daß es sich hier um ein blockorientiertes Verfahren handelt, wobei die Blockerzeugung durch den Analyse-Filterbank-Block 71 von Fig. 8 bewirkt wird, und wobei die Blockbildung erst am Audioausgang 84 des in Fig. 9 gezeigten Decodierers wieder aufgehoben wird.

Es wird ferner deutlich, daß es sich hier um ein verlustbehaftetes Codiererkonzept handelt, da das am Audioausgang 84 vorliegende decodierte Signal generell weniger Informationen beinhaltet als das am Audioeingang 70 vorliegende ursprüngliche Zeitsignal. Durch den durch das psychoakustische Modell 72 gesteuerten Quantisierer 73 werden Informationen aus dem am Audioeingang 70 vorliegenden ursprünglichen Zeitsignal entfernt, die im Decodierer nicht mehr wieder hinzugefügt werden, sondern auf die verzichtet wird. Rein subjektiv führt dieser Verzicht auf Informationen jedoch aufgrund des psychoakustischen Modells 72, das an die menschlichen Gehöreigenschaften angepaßt ist, im idealen Fall zu keinen Qualitätseinbußen, sondern lediglich zu einer angestrebten Datenkomprimierung.

An dieser Stelle sei darauf hingewiesen, daß das in Fig. 8 und Fig. 9 am Beispiel eines Audiosignals beschriebene Codiererkonzept entsprechend auch auf Bild- oder Videosignale angewendet wird, wobei anstelle des zeitlichen Audiosignals ein Videosignal vorhanden ist, wobei die spektrale Darstellung hier kein Tonspektrum ist, sondern ein Ortsspektrum. Ansonsten findet auch bei der Videosignalkomprimierung eine Analysefilterbank bzw. Transformation, ein psychooptisches Modell, eine dadurch gesteuerte Quantisierung und Entropie-Codierung statt, wobei ebenfalls das ganze Codier/Decodier-Konzept blockweise abläuft.

Das decodierte Signal (am Beispiel von Fig. 9 das decodierte Audiosignal am Audioausgang 84) ist typischerweise wieder ein Strom von zeitdiskreten Abtastwerten, denen ein Codierungs-Blockraster zugrunde liegt, das im decodierten Signal jedoch generell nicht sichtbar ist, es sei denn, daß besondere Vorkehrungen getroffen werden.

Während der Vorgang der Decodierung der Normalfall in der Anwendung, nämlich der Übertragung und Speicherung von Audio- und/oder Bildsignalen, ist, gibt es dennoch Fälle, in denen es von Interesse ist, ein gegebenes decodiertes Signal in eine Bitstromdarstellung "zurück zu übersetzen". Dies ist insbesondere in den folgenden Fällen von Interesse, wenn nur das decodierte Signal zur Verfügung steht.

zum einen besteht oftmals der Bedarf, Codiersysteme anhand der von ihnen codierten und wieder decodierten Signale zu untersuchen, beispielsweise um herauszufinden, warum ein Codierer, der noch unbekannt ist, so gut klingt.

Darüberhinaus besteht ein Bedarf auf dem Bereich des Urheberrechtsschutzes, zweifelsfrei nachzuweisen, daß ein Musikstück oder ein Bild mit einem bestimmten Codierer ursprünglich codiert worden ist.

Schließlich besteht im Bereich der Übertragung beispielsweise über mehrere Netze der Bedarf, ein decodiertes Signal wieder zu codieren. In diesem Fall wird das in Fig. 8 und Fig. 9 gezeigte Codierer/Decodierer-Konzept nacheinander mehrmals auf ein ursprüngliches Audiozeitsignal ausgeübt. Hier bestehen Probleme dahingehend, daß sogenannte Tandem-Codierverzerrungen nachfolgender Codecstufen eingebracht werden.

In der Fachveröffentlichung "NMR Measurements on Multiple Generations Audio Coding", Michael Keyhl, Jürgen Herre, Christian Schmidmer, 96. AES-Versammlung, 26. Februar bis 1. März 1994, Amsterdam, Preprint 3803, wird vorgeschlagen, zur Reduktion der Tandem-Codierverzerrungen eine Identifikationsmarkierung in ein decodiertes Signal einzubringen, auf die nachfolgende Codierer-Stufen zugreifen können, um auf der Basis dieser Identifikationsmarkierung ihre Codierungsblock-Einteilung des erneut zu codierenden decodierten Signals durchzuführen, derart, daß alle Codec-Stufen in einer Kette von Codec-Stufen dasselbe Codierungs-Blockraster verwenden.

Obwohl dieses Verfahren die Tandem-Codierverzerrungen bedeutsam reduziert, ist es doch dahingehend nachteilig, daß die Identifikationsmarkierung durch einen Decodierer eingebracht werden muß und von einem nachfolgenden Codierer wieder extrahiert und interpretiert werden muß. Es sind also Änderungen sowohl an einem Decodierer als auch an einem Codierer erforderlich. Weiterhin ist dieses Konzept selbstverständlich nur für eine Tandem-Codierung von decodierten Signalen anwendbar, die diese Identifikationsmarkierung für das Codierungs-Blockraster haben. Für Signale, die diese Identifikationsmarkierung nicht haben, kann eine Codecstufe in einer Kette von Codecstufen selbstverständlich nicht auf eine Identifikationsmarkierung zugreifen.

Ähnliche Probleme bzw. Einschränkungen der Flexibilität ergeben sich auch bei dem MOLE-Konzept, das in "ISO/MPEG Layer 2 - Optimum re-Encoding of Decoded Audio using a MOLE-Signal", John Fletcher, 104te AES-Convention, 16. bis 19. Mai 1998, Preprint Nr. 4706, beschrieben ist. Allgemein gesagt werden zusätzliche Daten in das decodierte Audiosignal eingebracht, die detailliert beschreiben, auf welche Art das vorliegende decodierte Audiosignal codiert und decodiert worden ist. Diese Daten werden als MOLE-Signal bezeichnet. Wenn das decodierte Audiosignal wieder codiert werden muß, wird ein speziell ausgeführter Codierer dieses MOLE-Signal aus dem zu codierenden Signal extrahieren und auf der Basis dieses Signals die einzelnen Codiererschritte durchführen.

Ähnlich zu dem Konzept der Identifikationsmarkierung besteht auch hier ein Nachteil darin, daß der Decodierer, der ein codiertes ursprüngliches Zeitsignal zum ersten Mal decodiert, das Signal in das decodierte Audiosignal einbringen muß. Ein solcher Decodierer unterscheidet sich somit von den üblichen Standard-Decodierern. Des weiteren muß ein Codierer, der ein decodiertes Signal wieder codiert, das Bestimmungssignal extrahieren um dementsprechend zu arbeiten. Dieser gewissermaßen zweite Codierer muß ebenfalls modifiziert werden, derart, daß er das Bestimmungssignal lesen und interpretieren kann. Schließlich ist auch dieses Konzept nachteilhafterweise nur für decodierte Signale wirksam, die ein solches Bestimmungssignal haben, jedoch nicht für Signale, die kein solches Bestimmungssignal haben.

Zur Quantisierung (Block 73 in Fig. 8) wird ein erheblicher Aufwand bei der Berechnung der Skalenfaktoren betrieben, indem z. B. bei einem psychoakustischen Codierer das durch die Quantisierung eingeführte Quantisierungsrauschen unter die psychoakustische Maskierungsschwelle des Audiosignals am Audioeingang 70 gelegt wird. Hierbei ist jedoch gleichzeitig zu berücksichtigen, daß eine bestimmte Bitstromrate am Ausgang erforderlich sein kann. Nicht zuletzt besteht außerdem das generelle Ziel, das Audiosignal im wesentlichen ohne Verschlechterung der Audioqualität möglichst stark zu komprimieren.

In dem internationalen Standard MPEG-2 AAC, der bereits eingangs erwähnt worden ist, ist unter Abschnitt B.2.7 ein mögliches Quantisierungsverfahren beschrieben, bei dem ein aufwendiges iteratives Verfahren mit einer äußeren Iterationsschleife und einer inneren Iterationsschleife verwendet wird, um für alle drei Voraussetzungen optimale Skalenfaktoren für jedes Skalenfaktorband und damit die optimale Quantisierungsschrittweite zu berechnen.

Das Berechnen der Iterationsschleifen zur Bestimmung der Quantisierungsschrittweite nimmt somit einen beträchtlichen Teil des Rechenaufwands beim Codieren eines Audiosignals in Anspruch.

Wenn beispielsweise im Falle des Tandem-Codierens ein Signal codiert und dann wieder decodiert worden ist, und dann wieder codiert wird, so muß üblicherweise, selbst wenn das dem zu verarbeitenden Signal zugrundeliegende Codierungs-Blockraster bekannt ist, erneut die vollständige Quantisierung unter Verwendung des psychoakustischen Models, der inneren Iterationsschleife und der äußeren Iterationsschleife berechnet werden. Dies ist insoweit unbefriedigend, da die Quantisierungsparameter bereits beim früheren Codieren des ursprünglichen Zeitsignals berechnet worden sind. Im wieder decodierten Signal finden sich jedoch keinerlei explizite Hinweise, die bei einem weiteren Codieren verwendet werden könnten, um auf die aufwendige Berechnung der Skalenfaktoren und damit der Quantisierungsschrittweite verzichten zu können.

Die WO 99 04572 A offenbart ein Konzept zum erneuten Codieren von decodierten Signalen. Hierzu wird eine Einrichtung zum Identifizieren vorgesehen, welches Codiersystem beim ersten Codieren verwendet worden ist. Um die Quantisierung von MPEG-codierten Videodaten zu extrahieren, wird die sogenannte Intraquantisierungsmatrix bestimmt. Hierzu wird ein Eingangsbild in Makroblöcke geteilt. Die Makroblöcke werden dann in Blöcke geteilt. Hierauf wird eine DCT-Transformation auf die Blöcke ausgeführt. Für jede DCT-Koeffizientenposition existieren sechs Werte von den sechs Blöcken des Makroblocks, die alle die gleiche Quantisiererschrittweite hatten. Für diese sechs Werte wird nun ein Quantisierungsfaktor bestimmt. Hierzu werden verschiedene mögliche Quantisierungsfaktor-Werte ausprobiert, und es wird für jeden möglichen Quantisierungsfaktorwert die gemittelte quadratische Differenz zwischen dem Wert vor und nach der Probe-Quantisierung berechnet. Dann wird der gröbste Quantisierungsfaktor ausgewählt, für den diese mittlere quadratische Differenz kleiner als ein vorgegebener Schwellwert ist. Dies wird für jeden DCT-Koeffizienten durchgeführt, so daß sich am Ende eine Vielzahl von ausgewählten Quantisierungsfaktoren ergibt, aus denen dann der größte gemeinsame Faktor genommen wird, welcher ein Schätzwert für den Quantisierungscode ist, der bei der ursprünglichen codierung eingesetzt worden ist.

Die JP 08 037643 offenbart eine Quantisierungssteuerungsschaltung. Um eine Bildqualität zu erzeugen, werden jeweilige optimale Quantisiererschritte oder Quantisiererindizes basierend auf Koeffizientendaten bestimmt. Hierzu werden die Koeffizientendaten, die bei einer Cosinustransformation erzeugt werden, verwendet. Ferner wird festgestellt, ob die Koeffizientendaten in einem ganzzahligen Verhältnis zu einer bestimmten Zahl sind, wobei in diesem Fall der gemeinsame Teiler der Koeffizientendaten als korrigierter Quantisierungsschritt oder Quantisierungsindex verwendet wird.

Die Aufgabe der vorliegenden Erfindung besteht darin, eine Vorrichtung und ein Verfahren zum Analysieren eines Analysesignals zu schaffen.

Diese Aufgabe wird durch eine Vorrichtung nach Anspruch 1 oder durch ein Verfahren nach Anspruch 10 gelöst.

Eine weitere Aufgabe der vorliegenden Erfindung besteht darin, eine Vorrichtung und ein Verfahren zum Markieren und/oder Codieren eines Analysesignals zu schaffen, welche unter Verwendung von durch die Analyse gewonnenen Informationen arbeiten.

Diese Aufgabe wird durch eine Vorrichtung oder ein Verfahren zum Markieren eines Analysesignals nach Anspruch 8 bzw. 11 oder durch eine Vorrichtung und ein Verfahren zum Codieren eines Analysesignals nach Anspruch 9 bzw. 12 gelöst.

Der vorliegenden Erfindung liegt die Erkenntnis zugrunde, daß ein Analyse-Zeitsignal, das durch Codierung und Decodierung eines ursprünglichen Zeitsignals gemäß einem Codieralgorithmus erzeugt worden ist, oder falls bereits vorhanden, eine spektrale Darstellung irgendeines Analysesignals zwar keine expliziten Informationen bezüglich der verwendeten Quantisierung aufweist, aber aufgrund der Tatsache, daß das Quantisieren eine Form eines verlustbehafteten Codierens ist, dennoch Einflüsse bezüglich der Parameter hat, die ursprünglich quantisiert worden sind.

Bei Audiosignalen sind die Größen, die üblicherweise quantisiert werden, die Spektralkoeffizienten, welche durch Transformieren des Audiosignals von einer zeitlichen Darstellung in eine spektrale Darstellung erzeugt werden. Analog dazu sind bei Videosignalen die Größen, die quantisiert werden, die Ortsspektralkoeffizienten, also ebenfalls Koeffizienten, die durch Überführen einer zeitlichen Darstellung des Videosignals in eine spektrale Darstellung des Videosignals erzeugt werden können.

Erfindungsgemäß wird daher, um die Quantisierung, die einem Analyse-Zeitsignal zugrundeliegt, zu analysieren, zunächst das Codierungs-Blockraster bestimmt, das dem Analyse-Zeitsignal zugrundeliegt. Dieses Codierungs-Blockraster ist das Blockraster, das beim Codieren gemäß dem Codieralgorithmus des ursprünglichen Zeitsignals eingesetzt worden ist. Daran anschließend wird das Analyse-Zeitsignal unter Verwendung des ermittelten Codierungs-Blockrasters in eine spektrale Darstellung umgesetzt, um die Koeffizienten zu erhalten, die gemäß dem Codieralgorithmus quantisiert worden sind. Zum Umsetzen werden am besten die selben Parameter wie im zugrundeliegenden Umsetzungsschritt verwendet. Falls das Analysesignal jedoch bereits als spektrale Darstellung, d. h. eine Menge von Analyse-Spektralkoeffizienten, irgendeines Signals vorliegt, können die Schritte des Bestimmens des Codierungs-Blockrasters und des Umsetzens beim Ermitteln der Quantisierungsschrittweite übergangen werden.

Nun werden die Analyse-Spektralkoeffizienten gruppiert, um eine Gruppe von zumindest zwei Analyse-Spektralkoeffizienten zu erhalten. Aus diesen beiden Analyse-Spektralkoeffizienten wird nun erfindungsgemäß der größte gemeinsame Teiler zumindest nährungsweise berechnet. Der größte gemeinsame Teiler der beiden Analyse-Spektralkoeffizienten entspricht bereits der Quantisierungsschrittweite oder einem ganzzahligen Vielfachen der Quantisierungsschrittweite. Unterscheiden sich die zumindest zwei gruppierten Analyse-Spektralkoeffizienten z.B. um nur eine Quantisierungsschrittweite, so kann bereits aus lediglich zwei Analyse-Spektralkoeffizienten die Quantisierungsschrittweite direkt berechnet werden. Die Quantisierungsschrittweite ist hier unmittelbar gleich dem größten gemeinsame Teiler der beiden Analyse-Spektralkoeffizienten ist.

Wenn aus mehr als zwei Analyse-Spektralkoeffizienten der größte gemeinsame Teiler berechnet wird, so ist die Wahrscheinlichkeit immer größer, daß Spektralkoeffizienten bei der Berechnung des größten gemeinsamen Teilers berücksichtigt werden, die in entsprechendem Verhältnis zueinander sind. Dann wird der größte gemeinsame Teiler dieser Spektralkoeffizienten nicht nur ein ganzzahliges Vielfaches der Quantisierungsschrittweite sein, sondern direkt der Quantisierungsschrittweite entsprechen.

Wenn die Quantisierungsschrittweite bekannt ist, können - am Beispiel eines Audiocodierers - die beim Codieren verwendeten Skalenfaktoren ermittelt werden, indem der Zusammenhang zwischen Skalenfaktor und Codierungs-Verstärkungsfaktor berücksichtigt wird.

Auch ein ungleichförmiger Quantisierer, welcher größere Werte vor dem Runden "komprimiert", kann ohne weiteres analysiert werden, wenn die Komprimierungs-Kennlinie auf die Analyse-Spektralkoeffizienten angewendet wird, um von den Analyse-Spektralkoeffizienten abgeleitete Spektralkoeffizienten zu erzeugen. Aus diesen komprimierten Spektralkoeffizienten kann dann der größte gemeinsame Teiler bestimmt werden.

Werden im Falle eines modernen Audiocodierverfahrens, wie z.B. MPEG-2 Layer 3 oder MPEG-2 AAC, beim Quantisieren Skalenfaktoren für einzelne Skalenfaktorbänder verwendet, so können diese Skalenfaktoren aus dem größten gemeinsamen Teiler der Spektralkoeffizienten des jeweiligen Skalenfaktorbandes berechnet werden. Durch Auswerten der verschiedenen Skalenfaktoren - sie müssen alle in einem ganzzahligen Raster sein - kann ferner eine insgesamte Skalierung des Audiosignals festgestellt werden.

Falls dagegen einzelne Skalenfaktoren vom ganzzahligen Raster abweichen, können die tatsächlichen Quantisierungsschrittweiten in den einzelnen Skalenfaktorbändern gewissermaßen im Nachhinein berechnet werden. Dies ist der Fall, wenn die Operation des Bildens des größten gemeinsamen Teilers nicht die tatsächlichen Quantisierungsschrittweiten sondern ganzzahlige Vielfache derselben geliefert hat.

Das erfindungsgemäße Verfahren ist darin vorteilhaft, daß überhaupt eine Quantisierung völlig ohne explizite Quantisierungsinformationen im codierten und wieder decodierten Signal ermittelt werden kann. Damit können beliebige Codierersysteme bzw. beliebige Quantisierungstechniken von Codiersystemen analysiert werden, um herauszufinden, warum ein an sich unbekannter Codierer gewisse Eigenschaften hat.

Ein weiterer Vorteil besteht darin, daß insbesondere für forensische Zwecke und Untersuchungen zur Verletzung des Urheberrechtsschutzes Codiereigenschaften anhand eines codierten und wieder decodierten Signals festgestellt werden können, um daraus den Schluß ziehen zu können, daß ein Musikstück mit einem bestimmten Codierer codiert worden ist. Je nach Ausgangslage kann dann festgestellt werden, ob dieser Codierer dazu berechtigt war, oder ob ein Fall von Audio- und/oder Videopiraterie vorliegt.

Ein weiterer Vorteil des erfindungsgemäßen Konzepts besteht darin, daß beliebige codierte/decodierte Signale, welche auf unterschiedlichsten Datenbanken bereits vorhanden sind, analysiert werden können, um denselben dann die Informationen bezüglich der im Codierer verwendeten Quantisierung hinzuzufügen. Diese Informationen können dann von einem weiteren Codierer im Falle des Tandem-Codierens verwendet werden, um ohne Einfügung zusätzlicher Codierungsfehler eine beliebig häufige Wiederholung von Codierungs/Decodierungs-Operationen mit keinen bzw. nur minimalen Tandem-Codierverzerrungen zu ermöglichen. Dies entspricht dem zuvor erwähnten MOLE-Konzept, bei dem das MOLE-Signal ebenfalls dazu verwendet werden kann, eine beliebig häufige Tandem-Codierung vorzunehmen

Ein weiterer Vorteil des erfindungsgemäßen Verfahrens besteht darin, daß dasselbe unmittelbar dazu verwendet werden kann, unter Verwendung der ermittelten Quantisierungsinformationen eine Quantisierung des Audiosignals durchzuführen, da bereits die Analyse-Spektralkoeffizienten bzw. von denselben abgeleitete Spektralkoeffizienten vorliegen. Es wird also eine vollständige Codierung nach einem bestimmten Codierer-Standard möglich, ohne daß ein psychoakustisches Modell bzw. die zur Quantisierung erforderlichen Iterationsschleifen berechnet werden müssen. Somit können sämtliche in dem codierten und wieder decodierten Analyse-Zeitsignals "versteckten" Quantisierungsinformationen extrahiert werden, um ein erneutes Decodieren mit geringstem Aufwand zu erreichen.

Bevorzugte Ausführungsbeispiele der vorliegenden Erfindung werden nachfolgend bezugnehmend auf die beiliegenden Zeichnungen detailliert erläutert. Es zeigen:

Fig. 1 ein prinzipielles Blockschaltbild einer erfindungsgemäßen Vorrichtung zum Analysieren;

Fig. 2 eine Vorrichtung zum Analysieren mit Berücksichtigung einer ungleichförmigen Quantisierungsschrittweite;

Fig. 3 eine Erweiterung der Vorrichtung von Fig. 2 zur Berechnung von Skalenfaktoren für Skalenfaktorbänder;

Fig. 4 eine Erweiterung der Vorrichtung von Fig. 3 zum Auswerten der Skalenfaktoren;

Fig. 5 ein prinzipielles Blockschaltbild einer erfindungsgemäßen Vorrichtung zum Markieren und/oder Codieren des Analyse-Zeitsignals;

Fig. 6 ein prinzipielles Blockschaltbild eines bekannten Codierers;

Fig. 7 ein prinzipielles Blockschaltbild eines bekannten Decodierers;

Fig. 8 ein Blockschaltbild eines Audiocodierers; und

Fig. 9 ein Blockschaltbild eines Audio-Decodierers.

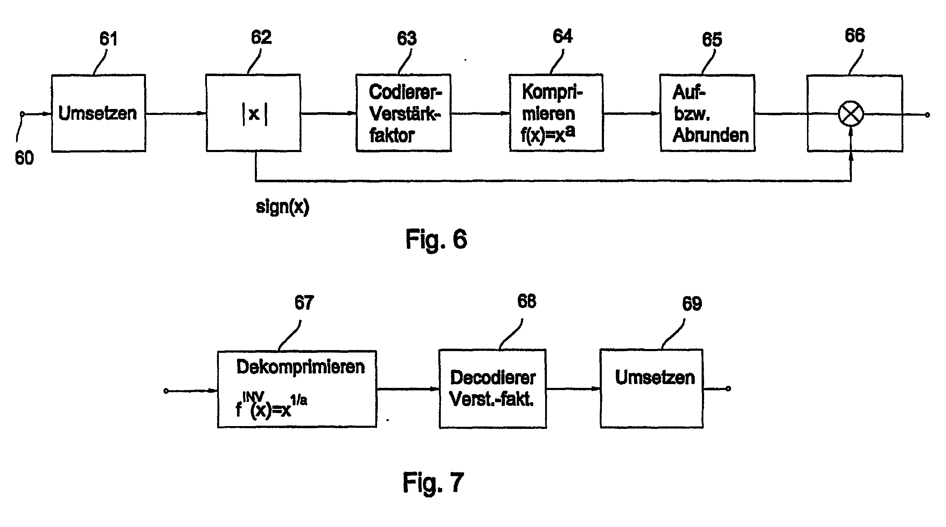

Bezugnehmend auf Fig. 6 wird eine zeitliche Darstellung z.B. eines Audiosignals in einen Eingang 60 der in Fig. 6 gezeigten Codierervorrichtung eingespeist. Das Audiosignals wird von seiner zeitlichen Darstellung in eine spektrale Darstellung desselben z.B. mittels einer Analyse-Filterbank umgesetzt (61). Die spektrale Darstellung des Audiosignals besteht aus einer Vielzahl von Spektralkoeffizienten, die das gesamte Spektrum bis zu einer maximalen Frequenz abdecken, die der Bandbreite des Audiosignals entspricht. In einem Block 62 wird der absolute Betrag jedes Spektralkoeffizienten x gebildet, während das Vorzeichen von x (d.h. sign(x)), für eine weitere getrennte Behandlung ausgegeben wird. Am Ausgang des Blocks 62 liegen somit lediglich absolute Beträge von Spektralkoeffizienten vor. Damit wird sichergestellt, daß sämtliche nachfolgenden Rechenoperationen und insbesondere die in einem Block 64 angedeutete Komprimierungsoperation mit definierten, d. h. positiven, Eingangswerten gespeist werden.

Im Beispiel der MPEG-2 AAC Quantisierung wird jeder Spektralkoeffizient in einem Block 63 mit einem vom Skalenfaktor abgeleiteten Codierer-Verstärkungsfaktor gemäß folgender Gleichung beaufschlagt:

$$x\_absw = x\_abs/([2 \,^{\wedge}(0{,}25)\cdot(sf\text{-}SF\_OFFSET))] \hspace{2cm} \text{(Gl. 1)}$$

In Gleichung 1 haben die verwendeten Variablen folgende Bedeutung:

X_absw: gewichteter Spektralwert am Ausgang des Blocks 63;

x_abs: absoluter Betrag eines Spektralwerts am Ausgang des Blocks 62;

sf: der für ein Skalenfaktorband im Bitstrom zu übertragende Skalenfaktor; und

SF_OFFSET: eine Konstante, die beispielsweise für MPEG-2 AAC den Wert 100 hat.

Die derart gewichteten Beträge der Spektralkoeffizienten werden dann in einem Block 64 komprimiert.

Dazu kann eine Funktion $f(x) = x^a$ verwendet werden, wobei im Falle eines Komprimierens der Koeffizient a kleiner als 1 ist. Dies bedeutet in anderen Worten, daß kleinere Spektralkoeffizienten weniger stark verkleinert werden als größere Spektralkoeffizienten. Dieses Komprimieren hat sich bei Audiosignalen als günstig herausgestellt. Analog könnte auch eine umgekehrte Funktion mit einem Koeffizienten a größer als 1 verwendet werden, derart, daß größere Spektralkoeffizienten gegenüber kleineren Spektralkoeffizienten vergrößert werden. Eine solche Funktion könnte für andere Signale als Audiosignale günstig sein.

Die eigentliche Quantisierung findet im Block 65, der mit Auf- bzw. Abrunden bezeichnet ist, statt. Die Funktion der beiden Blöcke 64 und 65 kann gleichungsmäßig folgendermaßen dargestellt werden:

$$x\_quant = sign(x) \cdot nint[x\_absw^a + const] \qquad (Gl.\ 2)$$

In Gleichung 2 haben die verwendeten Symbole folgende Bedeutung:

x_quant: die quantisierten Spektralkoeffizienten am Ausgang des Blocks 65;
a: der Komprimierungsparameter aus dem Block 64;
const: eine additive Konstante, die vorzugsweise klein gehalten wird; und
nint: die Funktion "nearest integer", die die Auf- bzw. Abrundung im Block 65 bewirkt.

Durch die Funktion nint[y] wird allgemein ein Wert y in die nächstliegende Ganzzahl auf- bzw. abgerundet. Hat y beispielsweise den Wert 1,2, so hat nint[y] den Wert 1. Hat y dagegen den Wert 1,6, so ergibt die Funktion nint[y] die ganze Zahl 2. Durch die Funktion nint[y] wird somit ein kontinuierlicher Wertevorrat auf ein diskreten Wertevorrat abgebildet. Anders ausgedrückt wird aus einer kontinuierlichen Funktion eine Treppenfunktion.

Die absolute Quantisierungsschrittweite entspricht somit dem Produkt des Codierer-Verstärkungsfaktors und dem "Abstand" von einer Ganzzahl zur nächsten Ganzzahl. Wird zwischen einer Ganzzahl und der nächsthöheren Ganzzahl gerundet, so ist die absolute Quantisierungsschrittweite gleich dem Codierer-Verstärkungsfaktor, da der Abstand zwischen den Ganzzahlen den Wert 1 hat. Selbstverständlich können beliebige Quantisierungsfunktionen verwendet werden, die beispielsweise keine Auf- bzw. Abrundung zur nächsten Ganzzahl durchführen, sondern beispielsweise zur übernächsten Ganzzahl.

Durch einen Block 66, der mit dem Block 62 in Verbindung steht, um von dem Block 62 Vorzeicheninformationen zu erhalten, wird den quantisierten Spketralkoeffizienten zur weiteren Verarbeitung wieder ihr Vorzeichen mitgegeben.

In Gleichung 2 ist ferner auch die Funktion sign(x) aufgeführt, was bedeutet, daß die quantisierten Spektralkoeffizienten am Ausgang des Blocks 66 wieder vorzeichenbehaftet sind.

In Fig. 7 wird der Fall betrachtet, bei dem die Vorzeichen der einzelnen Spektralkoeffizienten nicht mit den quantisierten Spektralkoeffizienten übertragen werden, sondern extra einem Block 66 zugeführt werden, der jedem absoluten Betrag eines Spektralkoeffizienten sein Vorzeichen hinzufügt. Die vorzeichenbehafteten quantisierten Spektralkoeffizienten werden dann in einem Block 67 dekomprimiert, d.h. einer zu der beim Komprimieren 64 in Fig. 6 inversen Operationen unterzogen.

Gleichungsmäßig kann die Funktion der Blöcke 66 und 67 folgendermaßen dargestellt werden:

$$x\_invquant = sign(x\_quant) \cdot |x\_quant|^{(1/a)} \qquad (Gl.\ 3)$$

In Gleichung 3 bedeutet die Variable x_invquant einen dekomprimierten Spektralkoeffizienten. Dieser dekomprimierte Spektralkoeffizient wird dann in einem Block 68 mit einem Decodierer-Verstärkungsfaktor beaufschlagt, welcher dem Codierer-Verstärkungsfaktor entspricht. Dies kann durch folgende Gleichung ausgedrückt werden:

$$x\_recon = x\_invquant * [2^{(0,25*(sf-SF\_OFFSET))}] \qquad (Gl.\ 4)$$

Aus einem Vergleich von Gleichung 1 und Gleichung 4 wird sichtbar, daß in Gleichung 4 der gleiche Decodierer-Verstärkungsfaktor zur Multiplikation verwendet wird, der in Gleichung 1 zur Division verwendet wird.

Wenn die am Ausgang 68 vorliegenden Spektralkoeffizienten durch einen Block 69 von ihrer spektralen Darstellung wieder in ihre zeitliche Darstellung umgesetzt worden sind, liegt ein codiertes und wieder decodiertes Signal vor, welches im Anschluß auch als Analyse-Zeitsignal bezeichnet wird. Die Ermittlung der diesem Signal zugrundeliegenden Quantisierung wird nachfolgend ausgeführt.

Bevor jedoch hierauf detaillierter eingegangen wird, sei noch darauf hingewiesen, daß bei Codierung mit einer gleichförmigen Quantisierung, z.B. MPEG-1 Layer 2, die Berechnung der Potenzfunktion entfällt. In der Terminologie der Figuren 6 und 7 würde dies einem Parameter a entsprechen.

Zusammenfassend kann festgestellt werden, daß in den Figuren 6 und 7 ein Codier/Decodiersystem dargestellt ist, das auf einem Codieralgorithmus basiert, der einen Umsetzungsschritt zum Erzeugen einer spektralen Darstellung eines Signals (Block 61) und einen Quantisierungsschritt zum Quantisieren von Spektralkoeffizienten (Block 65) aufweist. Werden Zwischenverarbeitungsschritte, wie z.B. in den Blöcken 62, 63 und 64, durchgeführt, so werden nicht die durch das Umsetzen gebildeten Spektralkoeffizienten quantisiert, sondern von denselben abgeleitete Spektralkoeffizienten.

Der Codieralgorithmus bestimmt gleichzeitig die zum Codieren umgekehrten Decodierschritte des Dekomprimierens (Block 67), des Beaufschlagens mit einem Decodierer-Verstärkungsfaktor (Block 68) und des entgegengesetzten Umsetzens von einer spektralen Darstellung in eine zeitliche Darstellung (Block 69). Es sei darauf hingewiesen, daß auch der in Fig. 7 gezeigte Decodierer - obwohl in Fig. 7 nicht eingezeichnet - Mittel zum Entfernen des Vorzeichens der quantisierten Spektralkoeffizienten vor dem Block 67 und Mittel zum Hinzufügen des Vorzeichens nach dem Block 67 analog zu Fig. 6 aufweist.

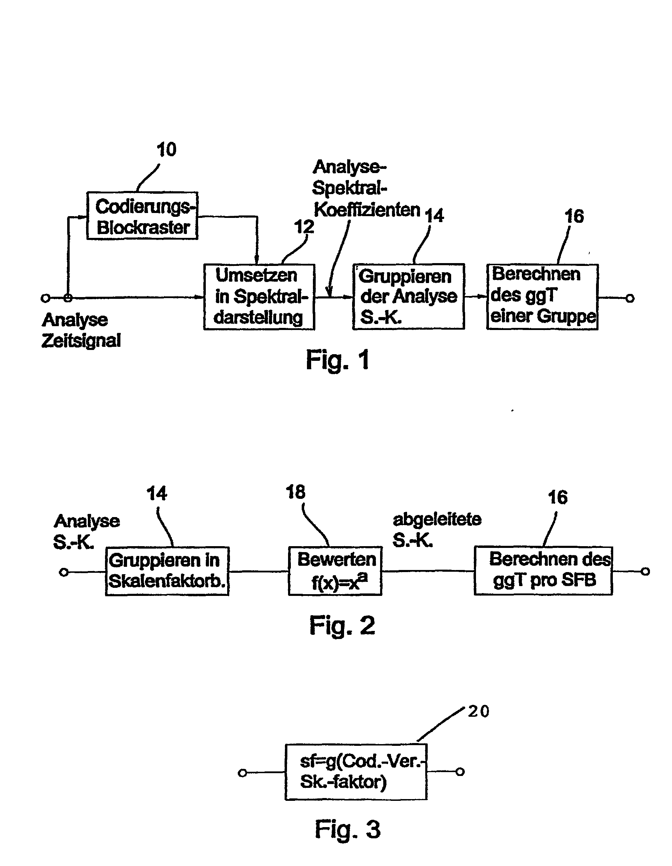

Nachfolgend wird auf Fig. 1 Bezug genommen, um eine erfindungsgemäße Vorrichtung zum Analysieren eines Analysesignals in Form eines Analyse-Zeitsignals oder eines beliebigen Signals zu beschreiben. Es sei darauf hingewiesen, daß keine detaillierte Darstellung des Falles gegeben wird, bei dem bereits eine irgendwie gewonnene spektrale Darstellung des Analysesignals vorhanden ist. Dieser Fall ergibt sich jedoch automatisch aus der folgenden Beschreibung, indem die Schritte des Bestimmens des Codierungs-Blockrasters und des Umsetzens von einer zeitlichen Darstellung in eine spektrale Darstellung weggelassen werden.

Ein Analyse-Zeitsignal am Eingang des in Fig. 1 gezeigten Blockschaltbilds ergibt sich durch Codieren eines ursprünglichen Zeitsignals mittels eines Codierers, der z. B. in Fig. 6 dargestellt ist, und durch Decodieren des von dem Codierer ausgegebenen codierten Zeitsignals mittels eines Decodierers, der z. B. in Fig. 7 dargestellt ist.

Wenn der Codierer von Fig. 6 und der Decodierer von Fig. 7 optimal arbeiten, so werden am Beispiel eines Audiosignals der subjektive Höreindruck des ursprünglichen Zeitsignals und des Analyse-Zeitsignals am Ausgang des Decodierers identisch sein. Dies setzt allerdings voraus, daß die durch die Quantisierung eingeführte Datenreduzierung lediglich Auswirkungen unterhalb der psychoakustischen Maskierungsschwelle hat und somit unhörbar ist. In anderen Worten ausgedrückt heißt dies, daß das durch die Quantisierung des Blocks 65 (Fig. 6) eingeführte Quantisierungsrauschen eine geringere Energie als durch die psychoakustische Maskierungsschwelle vorgegeben hat.

Obgleich der subjektive Höreindruck im Falle eines optimalen Codierers/Decodierers ungetrübt ist, unterscheiden sich das ursprüngliche Zeitsignal und das Analyse-Zeitsignal, das es zu analysieren gilt, darin, daß das Analyse-Zeitsignal gegenüber dem ursprünglichen Zeitsignal auf quantisierten Spektralkoeffizienten basiert.

Erfindungsgemäß wird nun, wie es in Fig. 1 gezeigt ist, das im Umsetzungsschritt 61 von Fig. 6 verwendete Codierungs-Blockraster bestimmt (Block 10). Die Informationen über das Codierungs-Blockraster 10 werden dazu verwendet, eine blockweise Umsetzung des Analyse-Zeitsignals von seiner zeitlichen Darstellung in seine spektrale Darstellung durchzuführen. (Block 12). Am Ausgang des Blocks 12 liegen dann Analyse-Spektralkoeffizienten vor. Die Analyse-Spektralkoeffizienten werden nun derart gruppiert (Block 14), daß eine Gruppe von zumindest zwei Analyse-Spektralkoeffizienten vorliegt. In einem Block 16 wird dann der größte gemeinsame Teiler der Spektralkoeffizienten in dieser Gruppe im Rahmen der numerischen Genauigkeit zumindest nährungsweise berechnet. Der größte gemeinsame Teiler entspricht dann der Quantisierungsschrittweite, der betrachteten Gruppe zugehörigen Spektralwerte.

An dieser Stelle sei darauf hingewiesen, daß der Ausdruck "größter gemeinsamer Teiler" in verallgemeinerter Bedeutung zu verstehen ist. Der größte gemeinsame Teiler muß nicht zwingend eine Ganzzahl sein, sondern kann jede reelle Zahl sein. Dies sei an folgendem Beispiel verdeutlicht. Hat ein Spektralkoeffizient den Wert 0,6, während der andere Spektralkoeffizient den Wert 0,9 hat, so beträgt der größte gemeinsame Teiler dieser beiden Spektralkoeffizienten 0,3. Die Quantisierungsschrittweite beläuft sich bei diesem Beispiel auf 0,3. Der quantisierte erste Spektralkoeffizient hat den Wert 2. Der quantisierte zweite Spektralkoeffizient hat den Wert 3.

Die Spektralwerte der Gruppe können durch Multiplikation eines ganzzahligen Faktors mit der ermittelten Quantisierungsschrittweite dargestellt werden. Der ganzzahlige Faktor entspricht dabei dem quantisierten Spektralwert.

Bisher wurde der Fall betrachtet, bei dem der größte gemeinsame Teiler bereits die Quantisierungsschrittweite selbst und nicht ein ganzzahliges Vielfaches derselben ist. Kein ganzzahliges Vielfaches der Quantisierungsschrittweite sondern die Quantisierungsschrittweite (QSW) selbst ergibt sich dann, wenn ein Spektralkoeffizient der Gruppe gleich dem Doppelten der Quantisierungsschrittweite ist, und der andere Spektralkoeffizient der Gruppe z. B. gleich dem Dreifachen der Quantisierungsschrittweite ist. Diese beiden Spektralkoeffizienten sind also teilerfremd.

Werden dagegen gleich große Spektralkoeffizienten gruppiert, so ist der größte gemeinsame Teiler dieser beiden Spektralkoeffizienten selbstverständlich wieder der Spektralkoeffizient. Die Quantisierungsschrittweite wäre dann gleich den beiden Spektralkoeffizienten, welche jedoch selbst wieder ein ganzzahliges Vielfaches der tatsächlichen Quantisierungsschrittweite sind.

Werden schließlich zwei Spektralkoeffizienten gruppiert, von denen der eine gleich dem Zweifachen der Quantisierungsschrittweite und der andere gleich dem Vierfachen der Quantisierungsschrittweite ist, so ergibt sich als größter gemeinsamer Teiler nicht die Quantisierungsschrittweite selbst sondern das Doppelte derselben.

Es sei darauf hingewiesen, daß in praktischen Fällen wesentlich mehr Spektralkoeffizienten zu einer Gruppe gruppiert werden, so daß der Fall außerordentlich selten auftritt, daß alle Spektralkoeffizienten in dieser Gruppe gleich groß sind bzw. derart sind, daß der größte gemeinsame Teiler der Spektralkoeffizienten nicht der tatsächlichen Quantisierungsschrittweite, sondern einem ganzzahligem Vielfachen der Quantisierungsschrittweite entspricht. Wie in den Fällen vorgegangen wird, bei denen diese Situation angezeigt ist, wird weiter hinten ausgeführt.

Bezugnehmend auf Fig. 2 wird eine Erweiterung des in Fig. 1 gezeigten Konzepts dahingehend beschrieben, daß ein ungleichförmiger Quantisierer verwendet wird, wie er beispielsweise anhand des in Fig. 6 gezeigten Codierers beschrieben worden ist. Zu Berücksichtigung wird eine Bewertung der gruppierten Analyse-Spektralkoeffizienten durchgeführt, welche am Beispiel des Audiosignals vorzugsweise in ihre Skalenfaktorbänder gruppiert werden. Die Bewertung ist in Fig. 2 durch einen Block 18 dargestellt. Sie ist zu der in Block 64 von Fig. 6 beschriebenen Komprimierung identisch. Damit werden aus den dort gruppierten Analyse-Spektralkoeffizienten abgeleitete Spektral-Koeffizienten gebildet, aus welchen dann ebenso wie in Fig. 1 beschrieben der größte gemeinsame Teiler pro Skalenfaktorband berechnet wird, um die ungleichförmig quantisierten Spektralwerte auszugeben.

Aus Fig. 2 wird ersichtlich, daß es unerheblich ist, ob zuerst eine Bewertung und dann eine Gruppierung durchgeführt wird, oder ob, wie es in Fig. 2 dargestellt ist, zunächst gruppiert wird und dann bewertet wird.

Fig. 3 zeigt den Fall, bei dem nicht nur eine ungleichförmige Quantisierung, sondern eine skalenfaktorbandweise Verstärkung, beispielsweise mittels des Blocks 63 von Fig. 6 vorgenommen worden ist. Die Multiplikation eines Spektralkoeffizienten mit einem Verstärkungsfaktor bewirkt eine Modifikation der Quantisierungsschrittweite. Werden die Spektralkoeffizienten vor der Auf- bzw. Abrundung mit einem Faktor beaufschlagt, so wird die Quantisierungsschrittweite, bezogen auf den Spektralkoeffizienten vor der Multiplikation mit dem Verstärkungsfaktor vergrößert oder verkleinert, je nachdem, ob der Verstärkungsfaktor kleiner oder größer als 1 ist.

Wie bezugnehmend auf Fig. 6 ausgeführt worden ist, entspricht der Skalenfaktor, welcher als Seiteninformationen zu einem decodierten Audiosignal übertragen wird, nicht unmittelbar dem Verstärkungsfaktor, sondern derselbe wird durch folgende Vorschrift aus dem Verstärkungsfaktor berechnet.

$$sf = 1/0{,}25 \cdot \log_2(q^{\wedge}(1/a)) + SF\_OFFSET \qquad \text{(Gl. 5)}$$

Wenn der in Fig. 3 gezeigte Block 20 die Funktion von Gleichung 5 ausführt, kann aus der Quantisierungsschrittweite, die einem Skalenfaktorband zugrundeliegt, der Skalenfaktor für dieses Skalenfaktorband berechnet werden. Die Quantisierungsschrittweite entspricht dem größten gemeinsamen Teiler q oder einem ganzzahligem Bruchteil desselben.

Das Herausfinden der Skalenfaktoren umfaßt also den Schritt der Rückrechnung der Kompression der ungleichförmigen Quantisiererkennlinie (Block 18 von Fig. 2) und die Konversion der Quantisierungsschrittweite in die im Codierer verwendete logarithmische Auflösung, die durch den Verstärkungsfaktor bestimmt wird. Wenn die Differenz aus (s - SF_OFFSET) = 1 ist, dann ergibt sich für den Codierer bzw. für den Decodierer ein Verstärkungsfaktor von $2^{\wedge}0{,}25$, was einem Wert von 1,5 dB entspricht.

Die sich ergebenden Skalenfaktorwerte sind idealerweise im Rahmen der Rechengenauigkeit ganze Zahlen. Hiervon existieren jedoch folgende Ausnahmen.

Sind alle Werte um einen konstanten Betrag verschoben, so zeigt dies eine Skalierung des Analyse-Zeitsignals um den entsprechenden Faktor an. Ergibt sich beispielsweise ein konstanter OFFSET über allen Skalenfaktoren von 0,2, d.h. lauten die Skalenfaktoren beispielsweise 101,2, 102,2, 103,2, ...., so deutet dies auf einen OFFSET von 0,2 hin. Erwartungsgemäß müßten die Skalenfaktoren nämlich im Rahmen der Rechengenauigkeit 101,0, 102,0, 103,0 ... betragen. Ein OFFSET von 0,2 entspricht einer Skalierung von 0,2 · 1,5 dB = 0,3 dB. Eine insgesamte Skalierung der Analyse-Zeitsignals könnte beispielsweise durch eine Dämpfung bzw. Verstärkung des Ausgangssignals des in Fig. 7 gezeigten Decodierers bewirkt wird.

Weichen einzelne bestimmte Skalenfaktoren vom ganzzahligen Raster ab, so hat dies seinen Grund in der bezüglich der Gewinnung des größten gemeinsamen Teilers einer Gruppe beschriebenen Mehrdeutigkeit. Wie es ausgeführt worden ist, kann der größte gemeinsame Teiler einer Gruppe entweder die Quantisierungsschrittweite direkt, oder aber ein ganzzahliges Vielfaches der Quantisierungsschrittweite sein.

Tritt dieser Fall ein, so wird Gleichung 5 iterativ mit einem modifizierten größten gemeinsamen Teiler q_mod = q/n durchgeführt, wobei der Parameter n eine ganze Zahl größer als 1 ist. Diese iterative Berechnung des Skalenfaktors wird solange durchgeführt, bis der resultierende Skalenfaktor wieder im erwarteten ganzzahligen Raster liegt. Entsprechend wird die für dieses Skalenfaktorband bestimmte "Quantisierungsschrittweite" modifiziert. Dieselbe wird durch den bei der Iteration festgestellten Faktor, bei dem das ganzzahlige Skalenfaktor-Raster erreicht worden ist, geteilt, um die eigentliche "Basis"-Quantisierungsschrittweite und nicht deren ganzzahliges Vielfaches zu erhalten. Dieser Faktor wird ferner dazu verwendet, um die quantisierten Werte um diesen Faktor nach oben zu korrigieren.

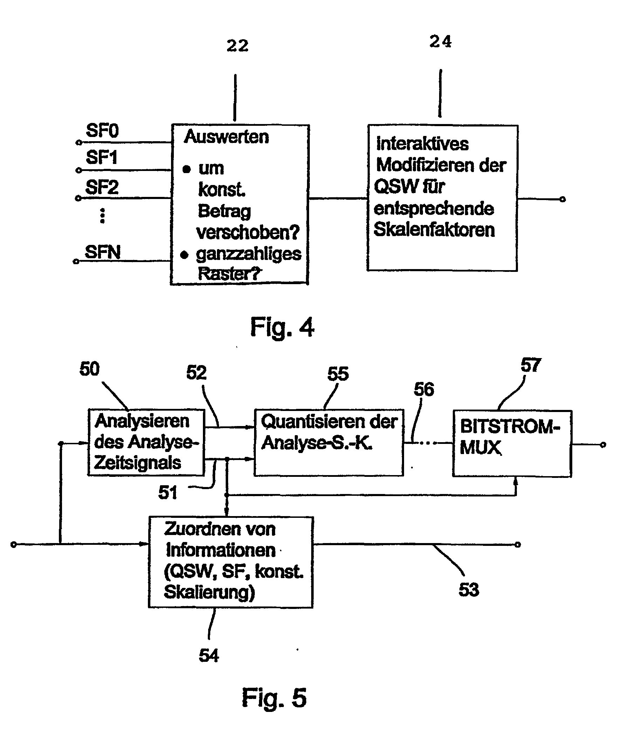

Diese Auswertung der Skalenfaktoren, die darauf basiert, daß zwar erwartete Eigenschaften der Skalenfaktoren (wie z. B. das ganzzahlige Raster) bekannt sind, jedoch nicht die konkreten Skalenfaktoren, ist in Fig. 4 anhand eines Blocks 22 und eines Blocks 24 schematisch dargestellt. Der Block 22 zum Auswerten der Skalenfaktoren erhält eingangsseitig sämtliche Skalenfaktoren SF 0, SF 1, SF 2, ..., SF N der Skalenfaktorbänder mit den Indizes 0, 1, 2, ..., N, um einerseits herauszufinden, ob dieselben um einen konstanten Betrag verschoben sind, und/oder um andererseits herauszufinden, ob dieselben in einem ganzzahligen Raster liegen oder nicht.

Falls dieselben nicht mehr im ganzzahligen Raster liegen, wird das durch den Block 24 iterative Modifizieren der Quantisierungsschrittweite für entsprechende Skalenfaktoren durchgeführt, um modifizierte Skalenfaktoren bzw. modifizierte Quantisierungsschrittweiten für die entsprechenden Gruppen zu erhalten.

Fig. 5 zeigt ein Blockschaltbild einer erfindungsgemäßen Vorrichtung zum Markieren eines Analyse-zeitsignals bzw. zum Codieren eines Analyse-zeitsignals. Diese Vorrichtung, die entweder zum Markieren oder unmittelbar zum Codieren des Analyse-zeitsignals verwendet werden kann, umfaßt zunächst eine Einrichtung 50 zum Analysieren des Analyse-Zeitsignals, die so aufgebaut ist, wie es bezugnehmend auf die Figuren 1 bis 4 dargestellt worden ist. Die Ausgabe der Einrichtung 50, wie sie bezugnehmend auf Fig. 1 beschrieben worden ist, besteht grundsätzlich in der Quantisierungsschrittweite pro Gruppe der Analyse-Spektralkoeffizienten. Diese Ausgabe wird über einen ersten Ausgang 51 einer Einrichtung 54 zum Zuordnen der Informationen zu dem Analyse-Zeitsignal übermittelt. An einem Ausgang 53 der Einrichtung 54 befindet sich das Analyse-Zeitsignal, nun jedoch mit Informationen versehen, die eine einfache erneute Codierung des Analyse-Zeitsignals ermöglichen. Diese Informationen können insbesondere, je nach Ausgestaltung der Einrichtung 50, die Quantisierungsschrittweite sein, oder aber, im Falle eines nach MPEG-2 AAC codierten Audiosignals die Skalenfaktoren für jedes Skalenfaktorband sowie die eventuell vorliegende konstante Skalierung, welche durch das bezugnehmend auf Fig. 4 beschriebene Konzept ermittelt werden kann.

Die Informationen können dem Analyse-Zeitsignal auf irgendeine bekannte Weise zugeordnet werden, beispielsweise in einem Header-Abschnitts eines jeden bzw. von einigen wenigen Abtastwerten des Analyse-Zeitsignals. Dieser Header-Abschnitt wird durch einen Transportkanal für die Abtastwerte des Analyse-Zeitsignals z. B. in Form von Zusatzfeldern entweder für jeden Abtastwert oder für eine Gruppe von Abtastwerten definiert. Prinzipiell kann auch derselbe Mechanismus wie beim Schreiben des MOLE-Signals verwendet werden.

Die Einrichtung 50 zum Analysieren des Analyse-Zeitsignals kann ferner angeordnet sein, um über einen zweiten Ausgang 52 die Analyse-Spektralkoeffizienten selbst auszugeben. Diese werden dann zusammen mit den Informationen über die Quantisierung in einer Einrichtung 55 zum Quantisieren der Analyse-Spektralkoeffizienten verwendet.

Die Einrichtung zum Quantisieren, die durch den Block 55 in Fig. 5 dargestellt ist, arbeitet derart, daß sie die Analyse-Spektralkoeffizienten einer Gruppe durch die für diese Gruppe ermittelte Quantisierungsschrittweite teilt, um somit wieder die quantisierten Analyse-Spektralkoeffizienten zu erhalten, die das an einem Ausgang 56 der in Fig. 5 gezeigten Vorrichtung vorhandenes Analyse-Signal bilden. Die Einrichtung 55 implementiert vozugsweise die selben Funktionalitäten, die in den Blöcken 62 bis 66 von Fig. 6 dargestellt sind. Das quantisierte Analyse-Signal besteht nun aus den quantisierten Spektralkoeffizienten und kann wie es bezugnehmend auf Fig. 8 beschrieben worden ist, möglicherweise nach einer Entropie-Codierung einem Bitstrom-Multiplexer 57 zugeführt werden. Im Falle des beschriebenen Audiocodierer-Beispiels werden auch die diversen Seiteninformationen, wie z.B. die Skalenfaktoren, welche ein Maß für die verwendeten Quantisierungsschrittweiten in den einzelnen Skalenfaktorbändern sind, von dem Ausgang 51 der Einrichtung 50 dem Bitstrom-Multiplexer 57 zugeführt.

Die quantisierten Spektralkoeffizienten des Analyse-Signals können dann, wie es bezugnehmend auf Fig. 8 beschrieben worden ist, Entropie-codiert und schließlich einem Bitstrommultiplexer zugeführt werden, um dann z.B. gespeichert zu oder erneut decodiert zu werden.

Es sei darauf hingewiesen, daß ein Codierungs-Blockraster, das durch den Block-orientierten Codierer, der beispielsweise wie in Fig. 6 dargestellt ausgeführt sein kann, praktisch zufällig festgelegt wird. Dieses Codierungs-Blockraster hat jedoch Einfluß auf die spektrale Darstellung des Signals. Bereits minimale Abweichungen oder Codierungs-Blockraster OFFSETS führen dazu, daß die spektrale Darstellung des decodierten Signals ein gänzlich anderes Erscheinungsbild hat als eigentlich von einer Spektraldarstellung des decodierten Signals erwartet werden würde, wenn demselben das gleiche Codierungs-Blockraster zugrundegelegt wird, das dem decodierten Signal an sich zugrundegelegt wird.

Im nachfolgenden wird auf verschiedene Möglichkeiten zum Bestimmen des Codierungs-Block-Rasters (Block 10 von Fig. 1) eingegangen. Das Codierungs-Block-Raster kann beispielsweise im Falle des Vorliegens einer Markierung im Analyse-Zeitsignal einfach anhand der Markierung ermittelt werden.

Alternativ kann das Codierungs-Blockraster auch ohne vorhandene Informationen ermittelt werden. Hierzu wird aus dem Analyse-Zeitsignal, das als Folge von zeitdiskreten Abtastwerten vorliegt, ein Abschnitt mit einer bestimmten Anzahl von zeitdiskreten Abtastwerten herausgegriffen, wobei der erste Abtastwert des herausgegriffenen Abschnitts als Ausgangs-Abtastwert bezeichnet wird. Anschließend wird der herausgegriffene Abschnitt mit der bestimmten Anzahl von zeitdiskreten Abtastwerten von seiner zeitlichen Darstellung in eine spektrale Darstellung umgesetzt. Dann wird die spektrale Darstellung des Abschnitts hinsichtlich eines vorbestimmten Kriteriums bewertet, um ein Bewertungsresultat für den Abschnitt zu erhalten. Entspricht das Bewertungsresultat bereits dem vorbestimmten Kriterium, so ist per Zufall das richtige Codierungs-Blockraster gefunden worden. Ist dies jedoch nicht der Fall, wird eine iterative Bestimmung durchgeführt, indem eine Mehrzahl von Abschnitten des decodierten Signals, die bei verschiedenen Ausgangs-Abtastwerten beginnen, herausgegriffen werden und dann umgesetzt und bewertet werden. Somit wird eine Mehrzahl von Bewertungsresultaten erhalten.

Schließlich werden die Bewertungsresultate durchsucht, um ein Bewertungsresultat herauszusuchen, das dem vorbestimmten Kriterium am besten entspricht. Dieses Verfahren ist detaillierter internationalen Patentanmeldung PCT/EP01/00241 beschrieben.

Bei datenreduzierenden Codieralgorithmen, welche immer dann vorliegen, wenn eine Quantisierung ausgeführt wird, und welche insbesondere vorliegen, wenn psychoakustische Modelle oder psychooptische Modelle eingesezt werden, ist von vorneherein bekannt, daß eine bestimmte Anzahl von Spektralkoeffizienten entweder aufgrund einer vorhandenen Quantisierungsschrittweite zu Null gesetzt werden, oder aber auch aufgrund eines psychoakustischen oder psychooptischen Modells zu Null gesetzt werden. Wenn daher eine spektrale Darstellung eines Analyse-Zeitsignals erhalten wird, bei dem das Spektrum ein relativ "verschmiertes" Aussehen hat, d.h. bei dem somit nicht eine bestimmte Anzahl von Spektralkoeffizienten gleich Null ist, so kann davon ausgegangen werden, daß das demselben zugrundeliegende Codierungs-Blockraster nicht mit dem ursprünglichen Blockraster übereinstimmt.

Das Bewertungskriterium, das beispielsweise darin besteht, daß eine bestimmte Anzahl von Spektralkoeffizienten gleich Null ist, wird daher bereits bei Abweichung eines Abtastwerts von ursprünglichen Codierungs-Blockraster bereits deutlich nicht mehr erfüllt. Damit kann unter Kombination des vorher beschriebenen Verfahrens zur Bestimmung des Codierungs-Blockrasters und des Verfahrens zum Bestimmen der Quantisierungs-Schrittweite eine vollständige Analyse einer einem Analyse-zeitsignal zugrundeliegenden Codierung erreicht werden.

Es soll an dieser Stelle bemerkt werden, daß das erfindungsgemäße Verfahren auch bei einfacher aufgebauten Codierverfahren angewendet werden kann, wie z. B. ISO/MPEG-1/2 Layer 1 oder Layer 2 oder dem Dolby-Verfahren AC-3. Diese Verfahren unterscheiden sich u. a. in folgenden Aspekten von dem hier beschriebenen Ausführungsbeispiel.

Es wird eine gleichförmige Quantisierung verwendet, d. h. die Funktion $f(x) = x^a$ degeneriert zu $f(x) = x$ bzw. $a = 1$.

Entsprechend müssen hier auch keine Vorzeichen bei der Quantisierung abgetrennt und wiedereingefügt werden.

Der Begriff "Skalenfaktor" wird anders gebraucht. Während bei MPEG-2 Layer 3 und MPEG-2 AAC der quantisierte Spektralkoeffizient mit dem Skalenfaktor zusammen die Quantisiererschrittweite festlegen, wird bei MPEG-1/2 Layer 1 oder Layer 2 ebenso wie bei Dolby AC-3 eine Art Gleitkommadarstellung mit einer Mantisse zwischen -1 und +1 und einem Exponent für die Spektralkoeffizienten verwendet. Der Exponent entspricht dabei dem Skalenfaktor und die Größe in Bits der Mantisse den sogenannten Bit-Allocation-Informationen (BAL-Informationen). Unter Kenntnis der Quantisiererschrittweite kann dann auf die Skalenfaktoren und die BAL-Informationen zurückgerechnet werden.

Schließlich wird bei den genannten einfacheren Verfahren keine Entropie-Codierung vorgenommen.

**Patentansprüche**

1. Vorrichtung zum Analysieren einer spektralen Darstellung eines Analysesignals, das Audio- und/oder Videodaten umfaßt, und das durch Codierung und Decodierung eines ursprünglichen Signals gemäß einem Codieralgorithmus erzeugt worden ist, wobei der Codieralgorithmus einen Quantisierungsschritt (62 - 66) aufweist, wobei der Quantisierungsschritt (62 - 66) zum Quantisieren zumindest eines Teils von ursprünglichen Spektralkoeffizienten oder von den ursprünglichen Spektralkoeffizienten abgeleiteten Spektralkoeffizienten einer spektralen Darstellung des ursprünglichen Signals unter Verwendung einer Quantisierungsschrittweite dient, wobei der Quantisierungsschritt des Codieralgorithmus das Gruppieren der ursprünglichen Spektralkoeffizienten in Skalenfaktorbänder aufweist, wobei jedem Skalenfaktorband ein Skalenfaktor zugeordnet ist, und wobei der Quantisierungsschritt ferner das Beaufschlagen der ursprünglichen Spektralkoeffizienten in einem Skalenfaktorband mit einem Codierungs-Verstärkungsfaktor umfaßt, wobei der Codierungs-Verstärkungsfaktor in einem vorbestimmten Zusammenhang zu einem Skalenfaktor für das Skalenfaktorband steht, mit folgenden Merkmalen:

   einer Einrichtung (14) zum Gruppieren von Analyse-Spektralkoeffizienten oder von von den Analyse-Spektralkoeffizienten abgeleiteten Spektralkoeffizienten der spektralen Darstellung des Analysesignals in die genannten Skalenfaktorbänder mit jeweils mindestens zwei Spektralkoeffizienten;

   einer Einrichtung (16) zum zumindest näherungsweisen Berechnen des größten gemeinsamen Teilers der gruppierten Analyse-Spektralkoeffizienten oder der von den Analyse-Spektralkoeffizienten abgeleiteten Spektralkoeffizienten in einem Skalenfaktorband, um die in dem Quantisierungsschritt (62 - 66) für die Analyse-Spektralkoeffizienten oder für die von den Analyse-Spektralkoeffizienten abgeleiteten Analyse-Spektralkoeffizienten verwendete Quantisierungsschrittweite oder ein ganzzahliges Vielfaches derselben zu erhalten; und

einer Einrichtung (20) zum Berechnen des Skalenfaktors für das Skalenfaktorband durch Auswerten des nach dem Skalenfaktor aufgelösten vorbestimmten Zusammenhangs zwischen dem Codierungs-Verstärkungsfaktor und dem Skalenfaktor, wobei in dem vorbestimmten Zusammenhang anstatt des Codierungs-Verstärkungsfaktors der berechnete größte gemeinsame Teiler eingesetzt ist.

2. Vorrichtung nach Anspruch 1, bei dem das Analysesignal auf ein ursprüngliches Analyse-Zeitsignal zurückgeht, wobei der Codieralgorithmus ferner einen Umsetzungsschritt (61) vor dem Quantisierungsschritt (62 - 66) aufweist, wobei der Umsetzungsschritt (61) zum Erzeugen einer spektralen Darstellung des ursprünglichen Zeitsignals, welche ursprüngliche Spektralkoeffizienten umfaßt, unter Verwendung eines Codierungs-Blockrasters dient, wobei die Vorrichtung ferner folgende Merkmale aufweist :

eine Einrichtung (10) zum Ermitteln des Codierungs-Blockrasters, das dem Analyse-Zeitsignal zugrunde liegt;

eine Einrichtung (12) zum Umsetzen des Analyse-Zeitsignals in eine spektrale Darstellung des Analyse-Zeitsignals unter Verwendung des ermittelten Codierungs-Blockrasters, wobei die spektrale Darstellung des Analyse-Zeitsignals die Analyse-Spektralkoeffizienten umfaßt.

3. Vorrichtung nach Anspruch 1 oder 2, wobei der Quantisierungsschritt (62 - 66) des Codieralgorithmus das Bewerten (64) der ursprünglichen Spektralkoeffizienten mit einer Bewertungsvorschrift umfaßt, um die von den ursprünglichen Spektralkoeffizienten abgeleiteten Spektralkoeffizienten zu erzeugen, wobei die Vorrichtung ferner folgende Merkmale aufweist:

eine Einrichtung (18) zum Bewerten der Analyse-Spektralkoeffizienten mit der Bewertungsvorschrift, um die von den Analyse-Spektralkoeffizienten abgeleiteten Spektralkoeffizienten zu erhalten.

4. Vorrichtung nach Anspruch 3, bei der die Bewertungsvorschrift der Einrichtung (18) zum Bewerten eine Funktion $f(x) = x^a$ ist, wobei a kleiner als 1 ist.

5. Vorrichtung nach einem der vorhergehenden Ansprüche, die ferner folgendes Merkmal aufweist:

eine Einrichtung zum Auswerten (22) von berechneten Skalenfaktoren für jedes Skalenfaktorband, wobei im Falle eines Skalenfaktors, der von einem ganzzahligen Raster der Skalenfaktoren abweicht, der diesem Skalenfaktor zugrundeliegende größte gemeinsame Teiler durch eine natürliche Zahl größer oder gleich 2 iterativ geteilt wird, um einen modifizierten größten gemeinsamen Teiler zu erhalten, wobei in jedem Iterationsschritt der Skalenfaktor unter Verwendung des modifizierten größten gemeinsamen Teilers berechnet wird, und wobei so viele Iterationsschritte ausgeführt werden, bis alle Skalenfaktoren in einem ganzzahligen Raster vorliegen.

6. Vorrichtung nach einem der vorhergehenden Ansprüche, die ferner folgendes Merkmal aufweist:

eine Einrichtung (22) zum Auswerten der Quantisierungsschrittweite für eine Mehrzahl von Gruppen von Analyse-Spektralkoeffizienten oder von den Analyse-Spektralkoeffizienten abgeleiteten Spektralkoeffizienten, wobei im Falle von unterschiedlichen Quantisierungsschrittweiten für die Gruppen die kleinste Quantisierungsschrittweite als dem Analyse-Zeitsignal zugrundeliegende Quantisierungsschrittweite bestimmt wird.

7. Vorrichtung nach Anspruch 5 oder 6, die ferner folgendes Merkmal aufweist:

eine weitere Einrichtung (22) zum Auswerten der berechneten Skalenfaktoren, wobei in dem Fall, in dem sämtliche Skalenfaktoren um einen konstanten Betrag von einem ganzzahligen Raster abweichen, eine insgesamte Skalierung des Analyse-Zeitsignals gegenüber dem ursprünglichen Zeitsignal um einen dem Betrag entsprechenden Faktor festgestellt wird.

8. Vorrichtung zum Markieren eines Analyse-Zeitsignals, das Audio- und/oder Videodaten umfaßt, und das durch Codierung und Decodierung eines ursprünglichen Zeitsignals gemäß einem Codieralgorithmus erzeugt worden ist, wobei der Codieralgorithmus einen Umsetzungsschritt (61) und einen Quantisierungsschritt (62 - 66) aufweist, wobei der Umsetzungsschritt (61) zum Erzeugen einer spektralen Darstellung des ursprünglichen Zeitsignals, welche ursprüngliche Spektralkoeffizienten umfaßt, unter Verwendung eines Codierungs-Blockrasters dient, und wobei der Quantisierungsschritt (62 - 66) zum Quantisieren zumindest eines Teils der ursprünglichen Spektralkoeffizienten oder von den ursprünglichen Spektralkoeffizienten abgeleiteten Spektralkoeffizienten unter Verwendung einer Quantisierungsschrittweite dient, wobei der Quantisierungsschritt des Codieralgorithmus das Gruppieren der ursprünglichen Spektralkoeffizienten in Skalenfaktorbänder aufweist, wobei jedem Skalenfaktorband ein Skalenfaktor zugeordnet ist, und wobei der Quantisierungsschritt ferner das Beaufschlagen der ursprünglichen Spektralkoeffizienten in einem Skalenfaktorband mit einem Codierungs-Verstärkungsfaktor umfaßt, wobei der Codierungs-Verstärkungsfaktor in einem vorbestimmten Zusammenhang zu einem Skalenfaktor für das Skalenfaktorband steht, mit folgenden Merkmalen:

einer Einrichtung zum Analysieren des Analyse-Zeitsignals, die folgende Merkmale aufweist:

einer Einrichtung (10) zum Ermitteln des Codierungs-Blockrasters, das dem Analyse-Zeitsignal zugrunde liegt;

einer Einrichtung (12) zum Umsetzen des Analyse-Zeitsignals in eine spektrale Darstellung des Analyse-Zeitsignals unter Verwendung des ermittelten Codierungs-Blockrasters, wobei die spektrale Darstellung des Analyse-Zeitsignals Analyse-Spektralkoeffizienten umfaßt;

einer Einrichtung (14) zum Gruppieren von Analyse-Spektralkoeffizienten oder von von den Analyse-Spektralkoeffizienten abgeleiteten Spektralkoeffizienten der spektralen Darstellung des Analysesignals in die genannten Skalenfaktorbänder mit jeweils mindestens zwei Spektralkoeffizienten;

einer Einrichtung (16) zum zumindest näherungsweisen Berechnen des größten gemeinsamen Teilers der gruppierten Analyse-Spektralkoeffizienten oder der von den Analyse-Spektralkoeffizienten abgeleiteten Spektralkoeffizienten in einem Skalenfaktorband, um die in dem Quantisierungsschritt (62 - 66) für die Analyse-Spektralkoeffizienten oder für die von den Analyse-Spektralkoeffizienten abgeleiteten Analyse-Spektralkoeffizienten verwendete Quantisierungsschrittweite oder ein ganzzahliges Vielfaches derselben zu erhalten; und

einer Einrichtung (20) zum Berechnen des Skalenfaktors für das Skalenfaktorband durch Auswerten des nach dem Skalenfaktor aufgelösten vorbestimmten Zusammenhangs zwischen dem Codierungs-Verstärkungsfaktor und dem Skalenfaktor, wobei in dem vorbestimmten Zusammenhang anstatt des Codierungs-Verstärkungsfaktors der berechnete größte gemeinsame Teiler eingesetzt ist; und

einer Einrichtung (54) zum Zuordnen von Informationen zu dem Analyse-Zeitsignal, die die Skalenfaktoren, die bei dem Quantisieren des ursprünglichen Zeitsignals, auf dem das Analyse-Zeitsignal basiert, verwendet wurden, betreffen, um das Analyse-Zeitsignal zu markieren.

**9.** Vorrichtung zum Codieren eines Analyse-Zeitsignals, das Audio- und/oder Videodaten umfaßt, und das durch Codierung und Decodierung eines ursprünglichen Zeitsignals gemäß einem Codieralgorithmus erzeugt worden ist, wobei der Codieralgorithmus einen Umsetzungsschritt (61) und einen Quantisierungsschritt (62 - 66) aufweist, wobei der Umsetzungsschritt (61) zum Erzeugen einer spektralen Darstellung des ursprünglichen Zeitsignals, welche ursprüngliche Spektralkoeffizienten umfaßt, unter Verwendung eines Codierungs-Blockrasters dient, und wobei der Quantisierungsschritt (62 - 66) zum Quantisieren zumindest eines Teils der ursprünglichen Spektralkoeffizienten oder von den ursprünglichen Spektralkoeffizienten abgeleiteten Spektralkoeffizienten unter Verwendung einer Quantisierungsschrittweite dient, wobei der Quantisierungsschritt des Codieralgorithmus das Gruppieren der ursprünglichen Spektralkoeffizienten in Skalenfaktorbänder aufweist, wobei jedem Skalenfaktorband ein Skalenfaktor zugeordnet ist, und wobei der Quantisierungsschritt ferner das Beaufschlagen der ursprünglichen Spektralkoeffizienten in einem Skalenfaktorband mit einem Codierungs-Verstärkungsfaktor umfaßt, wobei der Codierungs-Verstärkungsfaktor in einem vorbestimmten Zusammenhang zu einem Skalenfaktor für das Skalenfaktorband steht, mit folgenden Merkmalen:

einer Einrichtung (10) zum Ermitteln des Codierungs-Blockrasters, das dem Analyse-Zeitsignal zugrunde liegt;

einer Einrichtung (12) zum Umsetzen des Analyse-Zeitsignals in eine spektrale Darstellung des Analyse-Zeitsignals unter Verwendung des ermittelten Codierungs-Blockrasters, wobei die spektrale Darstellung des Analyse-Zeitsignals Analyse-Spektralkoeffizienten umfaßt;

einer Einrichtung (14) zum Gruppieren der Analyse-Spektralkoeffizienten oder der von den Analyse-Spektralkoeffizienten abgeleiteten Spektralkoeffizienten in die genannten Skalenfaktorbänder mit jeweils mindestens zwei Spektralkoeffizienten;

einer Einrichtung (16) zum zumindest näherungsweisen Berechnen des größten gemeinsamen Teilers der gruppierten Analyse-Spektralkoeffizienten oder der von den Analyse-Spektralkoeffizienten abgeleiteten Spektralkoeffizienten in einem Skalenfaktorband, um die in dem Quantisierungsschritt (62 - 66) für die Analyse-Spektralkoeffizienten oder für die von den Analyse-Spektralkoeffizienten abgeleiteten Analyse-Spektralkoeffizienten verwendete Quantisierungsschrittweite oder ein ganzzahliges Vielfaches derselben zu erhalten; und

einer Einrichtung (20) zum Berechnen des Skalenfaktors für das Skalenfaktorband durch Auswerten des nach dem Skalenfaktor aufgelösten vorbestimmten Zusammenhangs zwischen dem Codierungs-Verstärkungsfaktor und dem Skalenfaktor, wobei in dem vorbestimmten Zusammenhang anstatt des Codierungs-Verstärkungsfaktors der berechnete größte gemeinsame Teiler eingesetzt ist; und

einer Einrichtung (55) zum Quantisieren der Analyse-Spektralkoeffizienten oder der von den Analyse-Spektralkoeffizienten abgeleiteten Spektral-Koeffizienten unter Verwendung der bestimmten Skalenfaktoren, um ein codiertes Analyse-Zeitsignal zu erhalten.

10. Verfahren zum Analysieren einer spektralen Darstellung eines Analysesignals, das Audio- und/oder Videodaten umfaßt, und das durch Codierung und Decodierung eines ursprünglichen Signals gemäß einem Codieralgorithmus erzeugt worden ist, wobei der Codieralgorithmus einen Quantisierungsschritt (62 - 66) aufweist, wobei der Quantisierungsschritt (62 - 66) zum Quantisieren zumindest eines Teils von ursprünglichen Spektralkoeffizienten oder von den ursprünglichen Spektralkoeffizienten abgeleiteten Spektralkoeffizienten einer spektralen Darstellung des ursprünglichen Signals unter Verwendung einer Quantisierungsschrittweite dient, wobei der Quantisierungsschritt des Codieralgorithmus das Gruppieren der ursprünglichen Spektralkoeffizienten in Skalenfaktorbänder aufweist, wobei jedem Skalenfaktorband ein Skalenfaktor zugeordnet ist, und wobei der Quantisierungsschritt ferner das Beaufschlagen der ursprünglichen Spektralkoeffizienten in einem Skalenfaktorband mit einem Codierungs-Verstärkungsfaktor umfaßt, wobei der Codierungs-Verstärkungsfaktor in einem vorbestimmten Zusammenhang zu einem Skalenfaktor für das Skalenfaktorband steht, mit folgenden Schritten:

Gruppieren (14) von Analyse-Spektralkoeffizienten oder von von den Analyse-Spektralkoeffizienten abgeleiteten Spektralkoeffizienten der spektralen Darstellung des Analysesignals in die genannten Skalenfaktorbänder mit jeweils mindestens zwei Spektralkoeffizienten;

zumindest näherungsweises Berechnen (16) des größten gemeinsamen Teilers der gruppierten Analyse-Spektralkoeffizienten oder der von den Analyse-Spektralkoeffizienten abgeleiteten Spektralkoeffizienten in einem Skalenfaktorband, um die in dem Quantisierungsschritt (62 - 66) für die Analyse-Spektralkoeffizienten oder für die von den Analyse-Spektralkoeffizienten abgeleiteten Analyse-Spektralkoeffizienten verwendete Quantisierungsschrittweite oder ein ganzzahliges Vielfaches derselben zu erhalten; und

Berechnen (20) des Skalenfaktors für das Skalenfaktorband durch Auswerten des nach dem Skalenfaktor aufgelösten vorbestimmten Zusammenhangs zwischen dem Codierungs-Verstärkungsfaktor und dem Skalenfaktor, wobei in dem vorbestimmten Zusammenhang anstatt des Codierungs-Verstärkungsfaktors der berechnete größte gemeinsame Teiler eingesetzt ist.

11. Verfahren zum Markieren eines Analyse-Zeitsignals, das Audio- und/oder Videodaten umfaßt, und das durch Codierung und Decodierung eines ursprünglichen Zeitsignals gemäß einem Codieralgorithmus erzeugt worden ist, wobei der Codieralgorithmus einen Umsetzungsschritt (61) und einen Quantisierungsschritt (62 - 66) aufweist, wobei der Umsetzungsschritt (61) zum Erzeugen einer spektralen Darstellung des ursprünglichen Zeitsignals, welche ursprüngliche Spektralkoeffizienten umfaßt, unter Verwendung eines Codierungs-Blockrasters dient, und wobei der Quantisierungsschritt (62 - 66) zum Quantisieren zumindest eines Teils der ursprünglichen Spektralkoeffizienten oder von den ursprünglichen Spektralkoeffizienten abgeleiteten Spektralkoeffizienten unter Verwendung einer Quantisierungsschrittweite dient, wobei der Quantisierungsschritt des Codieralgorithmus das Gruppieren der ursprünglichen Spektralkoeffizienten in Skalenfaktorbänder aufweist, wobei jedem Skalenfaktorband ein Skalenfaktor zugeordnet ist, und wobei der Quantisierungsschritt ferner das Beaufschlagen der ursprünglichen Spektralkoeffizienten in einem Skalenfaktorband mit einem Codierungs-Verstärkungsfaktor umfaßt, wobei der Codierungsverstärkungsfaktor in einem vorbestimmten Zusammenhang zu einem Skalenfaktor für das Skalenfaktorband steht, mit folgenden Schritten:

Analysieren des Analyse-Zeitsignals, mit folgenden Unterschritten:

Ermitteln (10) des Codierungs-Blockrasters, das dem Analyse-Zeitsignal zugrunde liegt;

Umsetzen (12) des Analyse-Zeitsignals in eine spektrale Darstellung des Analyse-Zeitsignals unter Verwendung des ermittelten Codierungs-Blockrasters, wobei die spektrale Darstellung des Analyse-Zeitsignals Analyse-Spektralkoeffizienten umfaßt;

Gruppieren (14) von Analyse-Spektralkoeffizienten oder von von den Analyse-Spektralkoeffizienten abgeleiteten Spektralkoeffizienten der spektralen Darstellung des Analysesignals in die genannten Skalenfaktorbänder mit jeweils mindestens zwei Spektralkoeffizienten;

zumindest näherungsweises Berechnen (16) des größten gemeinsamen Teilers der gruppierten Analyse-Spektralkoeffizienten oder der von den Analyse-Spektralkoeffizienten abgeleiteten Spektralkoeffizienten in einem Skalenfaktorband, um die in dem Quantisierungsschritt (62 - 66) für die Analyse-Spektralkoeffizienten oder für die von den Analyse-Spektralkoeffizienten abgeleiteten Analyse-Spektralkoeffizienten verwendete Quantisierungsschrittweite oder ein ganzzahliges Vielfaches derselben zu erhalten; und

Berechnen (20) des Skalenfaktors für das Skalenfaktorband durch Auswerten des nach dem Skalenfaktor aufgelösten vorbestimmten Zusammenhangs zwischen dem Codierungs-Verstärkungsfaktor und dem Skalenfaktor, wobei in dem vorbestimmten Zusammenhang anstatt des Codierungs-Verstärkungsfaktors der berechnete größte gemeinsame Teiler eingesetzt ist; und

Zuordnen (54) von Informationen zu dem Analyse-Zeitsignal, die die Skalenfaktoren, die bei dem Quantisieren des ursprünglichen Zeitsignals, auf dem das Analyse-Zeitsignal basiert, verwendet wurden, betreffen, um das Analyse-Zeitsignal zu markieren.

12. Verfahren zum Codieren eines Analyse-Zeitsignals, das Audio- und/oder Videodaten umfaßt, und das durch Codierung und Decodierung eines ursprünglichen Zeitsignals gemäß einem Codieralgorithmus erzeugt worden ist, wobei der Codieralgorithmus einen Umsetzungsschritt (61) und einen Quantisierungsschritt (62 - 66) aufweist, wobei der Umsetzungsschritt (61) zum Erzeugen einer spektralen Darstellung des ursprünglichen Zeitsignals, welche ursprüngliche Spektralkoeffizienten umfaßt, unter Verwendung eines Codierungs-Blockrasters dient, und wobei der Quantisierungsschritt (62 - 66) zum Quantisieren zumindest eines Teils der ursprünglichen Spektralkoeffizienten oder von den ursprünglichen Spektralkoeffizienten abgeleiteten Spektralkoeffizienten unter Verwendung einer Quantisierungsschrittweite dient, wobei der Quantisierungsschritt des Codieralgorithmus das Gruppieren der ursprünglichen Spektralkoeffizienten in Skalenfaktorbänder aufweist, wobei jedem Skalenfaktorband ein Skalenfaktor zugeordnet ist, und wobei der Quantisierungsschritt ferner das Beaufschlagen der ursprünglichen Spektralkoeffizienten in einem Skalenfaktorband mit einem Codierungs-Verstärkungsfaktor umfaßt, wobei der Codierungs-Verstärkungsfaktor in einem vorbestimmten Zusammenhang zu einem Skalenfaktor für das Skalenfaktorband steht, mit folgenden Schritten:

Ermitteln (10) des Codierungs-Blockrasters, das dem Analyse-Zeitsignal zugrunde liegt;

Umsetzen (12) des Analyse-Zeitsignals in eine spektrale Darstellung des Analyse-Zeitsignals unter Verwendung des ermittelten Codierungs-Blockrasters, wobei die spektrale Darstellung des Analyse-Zeitsignals Analyse-Spektralkoeffizienten umfaßt;

Gruppieren (14) der Analyse-Spektralkoeffizienten oder der von den Analyse-Spektralkoeffizienten abgeleiteten Spektralkoeffizienten in die genannten Skalenfaktorbänder mit jeweils mindestens zwei Spektralkoeffizienten;

zumindest näherungsweises Berechnen (16) des größten gemeinsamen Teilers der gruppierten Analyse-Spektralkoeffizienten oder der von den Analyse-Spektralkoeffizienten abgeleiteten Spektralkoeffizienten in einem Skalenfaktorband, um die in dem Quantisierungsschritt (62 - 66) für die Analyse-Spektralkoeffizienten oder für die von den Analyse-Spektralkoeffizienten abgeleiteten Analyse-Spektralkoeffizienten verwendete Quantisierungsschrittweite oder ein ganzzahliges Vielfaches derselben zu erhalten; und

Berechnen (20) des Skalenfaktors für das Skalenfaktorband durch Auswerten des nach dem Skalenfaktor aufgelösten vorbestimmten Zusammenhangs zwischen dem Codierungs-Verstärkungsfaktor und dem Skalenfaktor, wobei in dem vorbestimmten Zusammenhang anstatt des Codierungs-Verstärkungsfaktors der berechnete größte gemeinsame Teiler eingesetzt ist; und

Quantisieren (55) der Analyse-Spektralkoeffizienten oder der von den Analyse-Spektralkoeffizienten abgeleiteten Spektral-Koeffizienten unter Verwendung der bestimmten Skalenfaktoren, um ein codiertes Analyse-Zeitsignal zu erhalten.

## Claims

1. Apparatus for analyzing a spectral representation of an analysis signal comprising audio and/or video data that has been generated;by encoding and decoding an original signal according to an encoding algorithm, wherein the encoding algorithm has a quantization step (62 - 66), wherein the quantization step (62 - 66) serves to quantize at least part of original spectral coefficients or spectral coefficients derived from the original spectral coefficients of a spectral representation of the original signal by using a quantization step width, wherein the quantization step of the encoding algorithm includes grouping of the original spectral coefficients into scale factor bands, wherein a scale factor is assigned to each scale factor band, and wherein the quantization step further comprises weighting the original spectral coefficients in a scale factor band with an encoding amplification factor, wherein the encoding amplification factor is in a predetermined relation to a scale factor for the scale factor band, comprising:

   means (14) for grouping analysis spectral coefficients or spectral coefficients derived from the analysis spectral coefficients of the spectral representation of the analysis signal in the above-mentioned scale factor bands comprising at least two spectral coefficients each;

   means (16) for at least approximately calculating the greatest common divisor of the grouped analysis spectral coefficients or the spectral coefficients derived from the analysis spectral coefficients in a scale factor band, to obtain the quantization step width used in the quantization step (62 - 66) for the analysis spectral coefficients or for the analysis spectral coefficients derived from the analysis spectral coefficients or an integer multiple of it; and

   means (20) for calculating the scale factor for the scale factor band by evaluating the predetermined relation between the encoding amplification factor and the scale factor dissolved after the scale factor, wherein the calculated greatest common divisor is inserted in the predetermined relation instead of the encoding amplification factor.

2. Apparatus according to claim 1, wherein the analysis signal goes back to an original analysis time signal, wherein the encoding algorithm further comprises a conversion step (61) before the quantization step (62 - 66), wherein the conversion step (61) serves to generate a spectral representation of the original time signal comprising original spectral coefficients, by using an encoding block raster, the apparatus further comprising:

   means (10) for establishing the encoding block raster underlying the analysis time signal;

   means (12) for converting the analysis time signal into a spectral representation of the analysis time signal by using the established encoding block raster, wherein the spectral representation of the analysis time signal comprises the analysis spectral coefficients.

3. Apparatus according to claim 1 or 2, wherein the quantization step (62 - 66) of the encoding algorithm comprises evaluating (64) the original spectral coefficients with an evaluation specification to generate the spectral coefficients derived from the original spectral coefficients, the apparatus further comprising:

   means (18) for evaluating the analysis spectral coefficients with the evaluation specification, to obtain the spectral coefficients derived from the analysis spectral coefficients.

4. Apparatus according to claim 3, wherein the evaluation specification of means (18) for evaluating is a function $f(x) = x^a$, wherein a is smaller than 1.

5. Apparatus according to one of the previous claims, further comprising:

   means for evaluating (22) of calculated scale factors for each scale factor band, wherein in the case of a scale factor deviating from an integer raster the greatest common divisor underlying this scale factor is divided iteratively by a natural number greater or equal to two, to obtain a modified greatest common divisor, wherein the scale factor is calculated in each iteration step by using the modified greatest common divider, and wherein as many iteration steps are performed until all scale factors are present in an integer raster.

6. Apparatus according to one of the previous claims, further comprising:

   means (22) for evaluating the quantization step width for a plurality of groups of analysis spectral coefficients for a plurality of groups of analysis spectral coefficients or of spectral coefficients derived from the analysis spectral coefficients, wherein in the case of different quantization step widths for the groups, the smallest quantization step width is determined as the quantization step width underlying the analysis time signal.

7. Apparatus according to claim 5 or 6, further comprising:

   another means (22) for evaluating the calculated scale factors, wherein in the case where all scale factors deviate from the integer raster by a constant amount, a total scaling of the analysis time signal to the original time signal by a factor corresponding to the amount is established.

8. Apparatus for marking an analysis time signal comprising audio and/or video data that has been generated by encoding and decoding an original time signal according to an encoding algorithm, wherein the encoding algorithm comprises a conversion step (61) and a quantization step (62 - 66), wherein the conversion step (61) serves to generate a spectral representation of the original time signal comprising original spectral coefficients by using an encoding block raster, and wherein the quantization step (62 - 66) serves to quantize at least part of the original spectral coefficients or spectral coefficients derived from the original spectral coefficients by using a quantization step width, wherein the quantization step of the encoding algorithm comprises grouping of the original spectral coefficients in scale factor bands, wherein a scale factor is associated to each scale factor band, and wherein the quantization step further comprises weighting the original spectral coefficients in a scale factor band with an encoding amplification factor, wherein the encoding amplification factor is in a predetermined relation to a scale factor for the scale factor band, comprising:

   means for analyzing the analysis time signal, comprising:

      means (10) for establishing the encoding block raster underlying the analysis time signal;

      means (12) for converting the analysis time signal into a spectral representation of the analysis time signal by using the established encoding block raster, wherein the spectral representation of the analysis time signal comprises analysis spectral coefficients;

      means (14) for grouping analysis spectral coefficients or spectral coefficients derived from the analysis spectral coefficients of the spectral representation of the analysis signal in the above-mentioned scale factor bands comprising at least two spectral coefficients each;

      means (16) for at least approximately calculating the greatest common divisor of the grouped analysis spectral coefficients or the spectral coefficients derived from the analysis spectral coefficients in a scale factor band, to obtain the quantization step width used in the quantization step (62 - 66) for the analysis spectral coefficients or for the analysis spectral coefficients derived from the analysis spectral coefficients or an integer multiple of it; and

      means (20) for calculating the scale factor for the scale factor band by evaluating the predetermined relation between the encoding amplification factor and the scale factor, dissolved after the scale factor wherein the calculated greatest common divisor is inserted into the predetermined relation instead of the encoding amplification factor; and

      means (54) for assigning information to the analysis time signal concerning the scale factors used in quantizing the original time signal on which the analysis time signal is based, to mark the analysis time signal.

9. Apparatus for encoding an analysis time signal comprising audio and/or video data that has been generated for encoding and decoding of an original time signal according to an encoding algorithm, wherein the encoding algorithm has a conversion step (61) and a quantization step (62 - 66), wherein the conversion step (61) serves to generate a spectral representation of the original time signal comprising original spectral coefficients by using an encoding block raster, wherein the quantization step (62 - 66) for quantization serves to quantize at least part of the original spectral coefficients or spectral coefficients derived from the original spectral coefficients by using a quantization step width, wherein the quantization step of the encoding algorithm comprises grouping of the original spectral coefficients in scale factor bands, wherein a scale factor is associated to each scale factor band, and wherein the quantization step further comprises weighting the original spectral coefficients in a scale factor band with an encoding amplification factor, wherein the encoding amplification factor is in a predetermined relation to a scale factor for the scale factor band, comprising:

means (10) for establishing the encoding block raster underlying the analysis time signal;

means (12) for converting the analysis time signal into a spectral representation of the analysis time signal by using the established encoding block raster, wherein the spectral representation of the analysis time signal comprises analysis spectral coefficients;

means (14) for grouping analysis spectral coefficients or spectral coefficients derived from the analysis spectral coefficients of the spectral representation of the analysis signal in the above-mentioned scale factor bands comprising at least two spectral coefficients each;

means (16) for at least approximately calculating the greatest common divisor of the grouped analysis spectral coefficients or the spectral coefficients derived from the analysis spectral coefficients in a scale factor band, to obtain the quantization step width used in the quantization step (62 - 66) for the analysis spectral coefficients or for the analysis spectral coefficients derived from the analysis spectral coefficients or an integer multiple of it; and

means (20) for calculating the scale factor for the scale factor band by evaluating the predetermined relation between the encoding amplification factor and the scale factor dissolved after the scale factor, wherein the calculated greatest common divisor is inserted into the predetermined relation instead of the encoding amplification factor; and

means (55) for quantizing the analysis spectral coefficients or the spectral coefficients derived from the analysis spectral coefficients by using the established scale factors to obtain an encoded analysis time signal.

10. Method for analyzing a spectral representation of an analysis signal comprising audio and/or video data that has been generated by encoding and decoding an original signal according to an encoding algorithm, wherein the encoding algorithm has a quantization step (62 - 66), wherein the quantization step (62 - 66) serves to quantize at least part of the original spectral coefficients or spectral coefficients derived from the original spectral coefficients of the spectral representation of the original signal by using a quantization step width, wherein the quantization step of the encoding algorithm comprises grouping the original spectral coefficients into scale factor bands, wherein a scale factor is associated to each scale factor band, wherein the quantization step further comprises weighting the original spectral coefficients in a scale factor band with an encoding amplification factor, wherein the encoding amplification factor is in a predetermined relation to a scale factor for the scale factor band, comprising:

grouping (14) of analysis spectral coefficients or spectral coefficients derived from the analysis spectral coefficients of the spectral representation of the analysis signal's in the above-mentioned scale factor bands comprising at least two spectral coefficients each;

at least approximately calculating (16) the greatest common divisor of the grouped analysis spectral coefficients or the spectral coefficients derived from the analysis spectral coefficients in a scale factor band, to obtain the quantization step width used in the quantization step (62 - 66) for the analysis spectral coefficients or for the analysis spectral coefficients derived from the analysis spectral coefficients or an integer multiple of it; and

calculating (20) the scale factor for the scale factor band by evaluating the predetermined relation between the encoding amplification factor and the scale factor dissolved after the scale factor, wherein the calculated greatest common divisor is inserted into the predetermined relation instead of the encoding amplification factor.

11. Method for marking an analysis time signal comprising audio and/or video data that has been generated by encoding and decoding an original time signal according to an encoding algorithm, wherein the encoding algorithm has a conversion step (61) and a quantization step (62 - 66), wherein the conversion step (61) serves to generate a spectral representation' of the original time signal comprising original spectral coefficients by using an encoding block raster, wherein the quantization step (62 - 66) serves to quantize at least part of the original spectral coefficients or the spectral coefficients derived from the original spectral coefficients by using a quantization step width, wherein the quantization step of the encoding algorithm comprises grouping of the original spectral coefficients into scale factor bands, wherein one scale factor is associated to each scale factor band, wherein the quantization step further comprises weighting the original spectral coefficients in a scale factor band with an encoding amplification factor, wherein the encoding amplification factor is in a predetermined relation to a scale factor for the scale factor band, comprising:

analyzing the analysis time signal with the following sub-steps:

establishing (10) the encoding block raster underlying the analysis time signal;

converting (12) the analysis time signal into a spectral representation of the analysis time signal by using the established encoding block raster, wherein the spectral representation of the analysis time signal comprises analysis spectral coefficients;

grouping (14) of analysis spectral coefficients or spectral coefficients derived from the analysis spectral coefficients of the spectral representation of the analysis signal in the above-mentioned scale factor bands comprising at least two spectral coefficients each;

at least approximately calculating (16) the highest common divisor of the grouped analysis spectral coefficients or the spectral coefficients derived from the analysis spectral coefficients in a scale factor band, to obtain the quantization step width used in the quantization step (62 - 66) for the analysis spectral coefficients or the analysis spectral coefficients derived from the analysis spectral coefficients or an integer multiple of it;

calculating (20) the scale factor for the scale factor band by evaluating the predetermined relation between the encoding amplification factor and the scale factor dissolved after the scale factor, wherein the calculated greatest common divisor is inserted into the predetermined relation instead of the encoding amplification factor; and

assigning (54) information to the analysis time signal concerning the scale factors used in quantizing the original time signal on which the analysis time signal is based, to mark the analysis time signal.

12. Method for encoding an analysis time signal comprising audio and/or video data that has been generated by encoding and decoding an original time signal according to an encoding algorithm, wherein the encoding algorithm has a conversion step (61) and a quantization step (62 - 66), wherein the conversion step (61) serves to generate a spectral representation of the original time signal comprising original spectral coefficients by using an encoding block raster, wherein the quantization step (62 - 66) serves to quantize at least part of the original spectral coefficients or the spectral coefficients derived from the original spectral coefficients by using a quantization step width, wherein the quantization step of the encoding algorithm comprises grouping the original spectral coefficients into scale factor bands, wherein one scale factor is associated to each scale factor band, wherein the quantization step further comprises weighting the original spectral coefficients in a scale factor band with an encoding amplification factor, wherein the encoding amplification factor is in a predetermined relation to a scale factor for the scale factor band, comprising:

establishing (10) the encoding block raster underlying the analysis time signal;

converting (12) the analysis time signal into a spectral representation of the analysis time signal by using the established encoding block raster, wherein the spectral representation of the analysis time signal comprises analysis spectral coefficients;

grouping (14) of the analysis spectral coefficients or the spectral coefficients derived from the analysis spectral coefficients in the above-mentioned scale factor bands comprising at least two spectral coefficients each;

at least approximately calculating (16) the greatest common divisor of the grouped analysis spectral coefficients or the spectral coefficients derived from the analysis spectral coefficients in a scale factor band, to obtain the quantization step width used in the quantization step (62 - 66) for the analysis spectral coefficients or for the analysis spectral coefficients derived from the analysis spectral coefficients or an integer multiple of it; and

calculating (20) the scale factor for the scale factor band by evaluating the predetermined relation between the encoding amplification factor and the scale factor dissolved after the scale factor, wherein the calculated greatest common divisor is inserted into the predetermined relation instead of the encoding amplification factor; and

quantizing (55) the analysis spectral coefficients or the spectral coefficients derived from the analysis spectral coefficients by using the predetermined scale factors to obtain an encoded analysis time signal.

**Revendications**

1. Dispositif d'analyse d'une représentation spectrale d'un signal d'analyse contenant des données audio et/ou vidéo, lequel a été généré par codage et décodage d'un signal d'origine selon un algorithme de codage, l'algorithme de codage présentant une étape de quantification (62 - 66), l'étape de quantification (62 - 66) servant à quantifier, moyennant l'utilisation d'un pas de quantification, au moins une partie de coefficients spectraux d'origine ou de coefficients spectraux d'une représentation spectrale du signal d'origine, lesquels sont dérivés des coefficients spectraux d'origine, l'étape de quantification de l'algorithme de codage comportant le groupement des coefficients spectraux d'origine en bandes de facteurs d'échelle, un facteur d'échelle étant associé à chaque bande de facteurs d'échelle et l'étape de quantification comprenant en outre l'adjonction d'un facteur d'amplification de codage aux coefficients spectraux d'origine dans une bande de facteurs d'échelle, le facteur d'amplification de codage étant dans un rapport prédéterminé avec un facteur d'échelle pour la bande de facteurs d'échelle, présentant les caractéristiques suivantes:

   - un dispositif (14) de groupement de coefficients spectraux d'analyse ou de coefficients spectraux de la représentation spectrale du signal d'analyse, lesquels sont dérivés des coefficients spectraux d'analyse, dans les bandes de facteurs d'échelle mentionnées avec au moins deux coefficients spectraux dans chaque cas;

   - un dispositif (16) pour le calcul, au moins approximatif, du plus grand dénominateur commun des coefficients spectraux d'analyse groupés ou des coefficients spectraux dérivés des coefficients spectraux d'analyse dans une bande de facteurs d'échelle pour obtenir le pas de quantification utilisé dans l'étape de quantification (62 - 66) pour les coefficients spectraux d'analyse ou pour les coefficients spectraux d'analyse dérivés des coefficients spectraux d'analyse, ou un multiple entier de ce dernier et

   - un dispositif (20) de calcul du facteur d'échelle pour la bande de facteurs d'échelle par analyse du rapport prédéterminé entre le facteur d'amplification de codage et le facteur d'échelle, ledit rapport étant défini par rapport au facteur d'échelle et le plus grand dénominateur commun déterminé par calcul étant mis à la place du facteur d'amplification de codage dans ledit rapport prédéterminé.

2. Dispositif selon la revendication 1, dans lequel le signal d'analyse remontant à un signal temporel d'analyse d'origine, l'algorithme de codage présentant par ailleurs une étape de conversion (61) précédant l'étape de quantification (62 - 66), l'étape de conversion (61) servant à générer, moyennant l'utilisation d'une grille de blocs de codage, une représentation spectrale du signal temporel d'origine, laquelle contient des coefficients spectraux d'origine, le dispositif présentant par ailleurs les caractéristiques suivantes:

   - un dispositif (10) pour la détermination de la grille de blocs de codage à la base du signal temporel d'analyse;

   - un dispositif (12) pour la conversion du signal temporel d'analyse en une représentation spectrale du signal temporel d'analyse moyennant l'utilisation de la grille de blocs de codage déterminée, la représentation spectrale du signal temporel d'analyse contenant les coefficients spectraux d'analyse.

**3.** Dispositif selon la revendication 1 où 2, l'étape de quantification (62 - 66) de l'algorithme de codage comprenant la pondération (64) des coefficients spectraux d'origine avec une règle de pondération pour générer les coefficients spectraux dérivés des coefficients spectraux d'origine, le dispositif présentant par ailleurs les caractéristiques suivantes:

- un dispositif (18) pour la pondération des coefficients spectraux d'analyse avec la règle de pondération pour obtenir les coefficients spectraux dérivés des coefficients spectraux d'analyse.

**4.** Dispositif selon la revendication 3, dans lequel la règle de pondération du dispositif de pondération (18) est une fonction $f(x) = x^a$, a étant inférieur à 1.

**5.** Dispositif selon l'une des revendications précédentes, présentant par ailleurs la caractéristiques suivante:

- un dispositif pour l'analyse (22) de facteurs d'échelle calculés pour chaque bande de facteurs d'échelle, le plus grand dénominateur commun à la base dudit facteur d'échelle étant, dans le cas d'un facteur d'échelle s'écartant d'une grille entière des facteurs d'échelle, divisé itérativement par un nombre naturel supérieur ou égal à 2 pour obtenir un dénominateur commun modifié le plus grand, le facteur d'échelle étant calculé à chaque étape d'itération moyennant l'utilisation du plus grand dénominateur commun modifié et autant d'étapes d'itération étant exécutées qu'il le faut jusqu'à ce que tous les facteurs d'échelle se trouvent dans une grille entière.

**6.** Dispositif selon l'une des revendications précédentes, présentant par ailleurs la caractéristique suivante:

un dispositif (22) pour l'analyse du pas de quantification pour. une pluralité de groupes de coefficients spectraux d'analyse ou de coefficients spectraux dérivés des coefficients spectraux d'analyse, le plus petit pas de quantification étant défini en tant que pas de quantification à la base du signal temporel d'analyse en cas de pas de quantification différents pour les groupes.

**7.** Dispositif selon la revendication 5 ou 6, présentant par ailleurs la caractéristique suivante:

- un autre dispositif (22) pour l'analyse des facteurs d'échelle calculés, une mise à l'échelle d'ensemble du signal temporel d'analyse étant constatée par rapport au signal temporel d'origine au cas où tous les facteurs d'échelle s'écartent d'un montant constant par rapport à une grille entière, la mise à l'échelle étant d'un facteur correspondant audit montant.

**8.** Dispositif pour le marquage d'un signal temporel d'analyse contenant des données audio et/ou vidéo, lequel a été généré par codage et décodage d'un signal temporel d'origine selon un algorithme de codage, l'algorithme de codage présentant une étape de conversion (61) et une étape de quantification (62 - 66), l'étape de conversion (61) servant à générer, moyennant l'utilisation d'une grille de blocs de codage, une représentation spectrale du signal temporel d'origine, laquelle contient des coefficients spectraux d'origine, et l'étape de quantification (62 - 66) servant à quantifier, moyennant l'utilisation d'un pas de quantification, au moins une partie des coefficients spectraux d'origine ou des coefficients spectraux dérivés des coefficients spectraux d'origine, l'étape de quantification de l'algorithme de codage comportant le groupement des coefficients spectraux d'origine en bandes de facteurs d'échelle, un facteur d'échelle étant associé à chaque bande de facteurs d'échelle et l'étape de quantification comprenant en outre l'adjonction d'un facteur d'amplification de codage aux coefficients spectraux d'origine dans une bande de facteurs d'échelle, le facteur d'amplification de codage étant dans un rapport prédéterminé avec un facteur d'échelle pour la bande de facteurs d'échelle, présentant les caractéristiques suivantes:

- un dispositif pour l'analyse du signal temporel d'analyse, présentant les caractéristiques suivantes:

  - un dispositif (10) pour la détermination de la grille de blocs de codage à la base du signal temporel d'analyse;

  - un dispositif (12) pour la conversion du signal temporel d'analyse en une représentation spectrale du signal temporel d'analyse moyennant l'utilisation de la grille de blocs de codage déterminée, la représentation spectrale du signal temporel d'analyse contenant des coefficients spectraux d'analyse;

  - un dispositif (14) de groupement de coefficients spectraux d'analyse ou de coefficients spectraux de la représentation spectrale du signal d'analyse, lesquels sont dérivés des coefficients spectraux d'analyse, dans les bandes de facteurs d'échelle mentionnées avec au moins deux coefficients spectraux dans chaque cas;

- un dispositif (16) pour le calcul, au moins approximatif, du plus grand dénominateur commun des coefficients spectraux d'analyse groupés ou des coefficients spectraux dérivés des coefficients spectraux d'analyse dans une bande de facteurs d'échelle pour obtenir le pas de quantification utilisé dans l'étape de quantification (62 - 66) pour les coefficients spectraux d'analyse ou pour les coefficients spectraux d'analyse dérivés des coefficients spectraux d'analyse, ou un multiple entier de ce dernier et

- un dispositif (20) de calcul du facteur d'échelle pour la bande de facteurs d'échelle par analyse du rapport prédéterminé entre le facteur d'amplification de codage et le facteur d'échelle, ledit rapport étant défini par rapport au facteur d'échelle et le plus grand dénominateur commun déterminé par calcul étant mis à la place du facteur d'amplification de codage dans ledit rapport prédéterminé et

- un dispositif (54) pour l'affectation, aux fins du marquage du signal temporel d'analyse, d'informations au signal temporel d'analyse, lesquelles concernent les facteurs d'échelle qui ont été utilisés lors de la quantification du signal temporel d'origine sur lequel se base le signal temporel d'analyse.

9. Dispositif de codage d'un signal temporel d'analyse contenant des données audio et/ou vidéo, lequel a été généré par codage et décodage d'un signal temporel d'origine selon un algorithme de codage, l'algorithme de codage présentant une étape de conversion (61) et une étape de quantification (62 - 66), l'étape de conversion (61) servant à générer, moyennant l'utilisation d'une grille de blocs de codage, une représentation spectrale du signal temporel d'origine, laquelle contient des coefficients spectraux d'origine, et l'étape de quantification (62 - 66) servant à quantifier, moyennant l'utilisation d'un pas de quantification, au moins une partie des coefficients spectraux d'origine ou des coefficients spectraux dérivés des coefficients spectraux d'origine, l'étape de quantification de l'algorithme de codage comportant le groupement des coefficients spectraux d'origine en bandes de facteurs d'échelle, un facteur d'échelle étant associé à chaque bande de facteurs d'échelle et l'étape de quantification comprenant en outre l'adjonction d'un facteur d'amplification de codage aux coefficients spectraux d'origine dans une bande de facteurs d'échelle, le facteur d'amplification de codage étant dans un rapport prédéterminé avec un facteur d'échelle pour la bande de facteurs d'échelle, présentant les caractéristiques suivantes:

- un dispositif (10) pour la détermination de la grille de blocs de codage à la base du signal temporel d'analyse;

- un dispositif (12) pour la conversion du signal temporel d'analyse en une représentation spectrale du signal temporel d'analyse moyennant l'utilisation de la grille de blocs de codage déterminée, la représentation spectrale du signal temporel d'analyse contenant des coefficients spectraux d'analyse;

- un dispositif (14) de groupement des coefficients spectraux d'analyse ou des coefficients spectraux de la représentation spectrale du signal d'analyse, lesquels sont dérivés des coefficients spectraux d'analyse, dans les bandes de facteurs d'échelle mentionnées avec au moins deux coefficients spectraux dans chaque cas;

- un dispositif (16) pour le calcul, au moins approximatif, du plus grand dénominateur commun des coefficients spectraux d'analyse groupés ou des coefficients spectraux dérivés des coefficients spectraux d'analyse dans une bande de facteurs d'échelle pour obtenir le pas de quantification utilisé dans l'étape de quantification (62 - 66) pour les coefficients spectraux d'analyse ou pour les coefficients spectraux d'analyse dérivés des coefficients spectraux d'analyse, ou un multiple entier de ce dernier et

- un dispositif (20) de calcul du facteur d'échelle pour la bande de facteurs d'échelle par analyse du rapport prédéterminé entre le facteur d'amplification de codage et le facteur d'échelle, ledit rapport étant défini par rapport au facteur d'échelle et le plus grand dénominateur commun déterminé par calcul étant mis à la place du facteur d'amplification de codage dans ledit rapport prédéterminé et

- un dispositif (55) de quantification des coefficients spectraux d'analyse ou des coefficients spectraux dérivés des coefficients spectraux d'analyse moyennant l'utilisation des facteurs d'échelle déterminés pour obtenir un signal temporel d'analyse codé.

10. Procédé d'analyse d'une représentation spectrale d'un signal d'analyse contenant des données audio et/ou vidéo, lequel a été généré par codage et décodage d'un signal d'origine selon un algorithme de codage, l'algorithme de codage présentant une étape de quantification (62 - 66), l'étape de quantification (62 - 66) servant à quantifier, moyennant l'utilisation d'un pas de quantification, au moins une partie de coefficients spectraux d'origine ou de coefficients spectraux d'une représentation spectrale du signal d'origine, lesquels sont dérivés des coefficients spectraux d'origine, l'étape de quantification de l'algorithme de codage comportant le groupement des coefficients spectraux d'origine en bandes de facteurs d'échelle, un facteur d'échelle étant associé à chaque bande de facteurs d'échelle et l'étape de quantification comprenant en outre l'adjonction d'un facteur d'amplification de codage aux coefficients spectraux d'origine dans une bande de facteurs d'échelle, le facteur d'amplification de codage étant dans un rapport prédéterminé avec un facteur d'échelle pour la bande de facteurs d'échelle, présentant les étapes suivantes:

- groupement (14) de coefficients spectraux d'analyse ou de coefficients spectraux de la représentation spectrale du signal d'analyse, lesquels sont dérivés des coefficients spectraux d'analyse, dans les bandes de facteurs d'échelle mentionnées avec au moins deux coefficients spectraux dans chaque cas;

- calcul (16), au moins approximatif, du plus grand dénominateur commun des coefficients spectraux d'analyse groupés ou des coefficients spectraux dérivés des coefficients spectraux d'analyse dans une bande de facteurs d'échelle pour obtenir le pas de quantification utilisé dans l'étape de quantification (62 - 66) pour les coefficients spectraux d'analyse ou pour les coefficients spectraux d'analyse dérivés des coefficients spectraux d'analyse, ou un multiple entier de ce dernier et

- calcul (20) du facteur d'échelle pour la bande de facteurs d'échelle par analyse du rapport prédéterminé entre le facteur d'amplification de codage et le facteur d'échelle, ledit rapport étant défini par rapport au facteur d'échelle et le plus grand dénominateur commun déterminé par calcul étant mis à la place du facteur d'amplification de codage dans ledit rapport prédéterminé.

11. Procédé de marquage d'un signal temporel d'analyse contenant des données audio et/ou vidéo, lequel a été généré par codage et décodage d'un signal temporel d'origine selon un algorithme de codage, l'algorithme de codage présentant une étape de conversion (61) et une étape de quantification (62 - 66), l'étape de conversion (61) servant à générer, moyennant l'utilisation d'une grille de blocs de codage, une représentation spectrale du signal temporel d'origine, laquelle contient des coefficients spectraux d'origine, et l'étape de quantification (62 - 66) servant à quantifier, moyennant l'utilisation d'un pas de quantification, au moins une partie des coefficients spectraux d'origine ou des coefficients spectraux dérivés des coefficients spectraux d'origine, l'étape de quantification de l'algorithme de codage comportant le groupement des coefficients spectraux d'origine en bandes de facteurs d'échelle, un facteur d'échelle étant associé à chaque bande de facteurs d'échelle et l'étape de quantification comprenant en outre l'adjonction d'un facteur d'amplification de codage aux coefficients spectraux d'origine dans une bande de facteurs d'échelle, le facteur d'amplification de codage étant dans un rapport prédéterminé avec un facteur d'échelle pour la bande de facteurs d'échelle, présentant les étapes suivantes:

- analyse du signal temporel d'analyse, présentant les sous-étapes suivantes:

  - détermination (10) de la grille de blocs de codage à la base du signal temporel d'analyse;

  - conversion (12) du signal temporel d'analyse en une représentation spectrale du signal temporel d'analyse moyennant l'utilisation de la grille de blocs de codage déterminée, la représentation spectrale du signal temporel d'analyse contenant des coefficients spectraux d'analyse;

  - groupement (14) de coefficients spectraux d'analyse ou de coefficients spectraux de la représentation spectrale du signal d'analyse, lesquels sont dérivés des coefficients spectraux d'analyse, dans les bandes de facteurs d'échelle mentionnées avec au moins deux coefficients spectraux dans chaque cas;

  - calcul (16), au moins approximatif, du plus grand dénominateur commun des coefficients spectraux d'analyse groupés ou des coefficients spectraux dérivés des coefficients spectraux d'analyse dans une bande de facteurs d'échelle pour obtenir le pas de quantification utilisé dans l'étape de quantification (62 - 66) pour les coefficients spectraux d'analyse ou pour les coefficients spectraux d'analyse dérivés des coefficients spectraux d'analyse, ou un multiple entier de ce dernier et

  - calcul (20) du facteur d'échelle pour la bande de facteurs d'échelle par analyse du rapport prédéterminé entre le facteur d'amplification de codage et le facteur d'échelle, ledit rapport étant défini par rapport au facteur d'échelle et le plus grand dénominateur commun déterminé par calcul étant mis à la place du facteur d'amplification de codage dans ledit rapport prédéterminé et

- affectation (54), aux fins du marquage du signal temporel d'analyse, d'informations au signal temporel d'analyse, lesquelles concernent les facteurs d'échelle qui ont été utilisés lors de la quantification du signal temporel d'origine sur lequel se base le signal temporel d'analyse.

12. Procédé de codage d'un signal temporel d'analyse contenant des données audio et/ou vidéo, lequel a été généré par codage et décodage d'un signal temporel d'origine selon un algorithme de codage, l'algorithme de codage présentant une étape de conversion (61) et une étape de quantification (62 - 66), l'étape de conversion (61) servant à générer, moyennant l'utilisation d'une grille de blocs de codage, une représentation spectrale du signal temporel d'origine, laquelle contient des coefficients spectraux d'origine, et l'étape de quantification (62 - 66) servant à quantifier, moyennant l'utilisation d'un pas de quantification, au moins une partie des coefficients spectraux d'origine ou des coefficients spectraux dérivés des coefficients spectraux d'origine, l'étape de quantification de l'algorithme de codage comportant le groupement des coefficients spectraux d'origine en bandes de facteurs d'échelle, un facteur d'échelle étant associé à chaque bande de facteurs d'échelle et l'étape de quantification comprenant en outre l'adjonction d'un facteur d'amplification de codage aux coefficients spectraux d'origine dans une bande de facteurs d'échelle, le facteur d'amplification de codage étant dans un rapport prédéterminé avec un facteur d'échelle pour la bande de facteurs d'échelle, présentant les étapes suivantes:

- détermination (10) de la grille de blocs de codage à la base du signal temporel d'analyse;

- conversion (12) du signal temporel d'analyse en une représentation spectrale du signal temporel d'analyse moyennant l'utilisation de la grille de blocs de codage déterminée, la représentation spectrale du signal temporel d'analyse contenant des coefficients spectraux d'analyse;

- groupement (14) des coefficients spectraux d'analyse ou des coefficients spectraux dérivés des coefficients spectraux d'analyse dans les bandes de facteurs d'échelle mentionnées avec au moins deux coefficients spectraux dans chaque cas;

- calcul (16), au moins approximatif, du plus grand dénominateur commun des coefficients spectraux d'analyse groupés ou des coefficients spectraux dérivés des coefficients spectraux d'analyse dans une bande de facteurs d'échelle pour obtenir le pas de quantification utilisé dans l'étape de quantification (62 - 66) pour les coefficients spectraux d'analyse ou pour les coefficients spectraux d'analyse dérivés des coefficients spectraux d'analyse, ou un multiple entier de ce dernier et

- calcul (20) du facteur d'échelle pour la bande de facteurs d'échelle par analyse du rapport prédéterminé entre le facteur d'amplification de codage et le facteur d'échelle, ledit rapport étant défini par rapport au facteur d'échelle et le plus grand dénominateur commun déterminé par calcul étant mis à la place du facteur d'amplification de codage dans ledit rapport prédéterminé et

- quantification (55) des coefficients spectraux d'analyse ou des coefficients spectraux dérivés des coefficients spectraux d'analyse moyennant l'utilisation des facteurs d'échelle déterminés pour obtenir un signal temporel d'analyse codé.

**10**

Codierungs-
Blockraster

Analyse-
Spektral-
Koeffizienten **14**

**12**

**16**

Umsetzen
in Spektraldarstellung

Gruppieren
der Analyse
S.-K.

Berechnen
des ggT
einer Gruppe

Analyse
Zeitsignal

## Fig. 1

**14**

**18**

**16**

Analyse
S.-K.

Gruppieren in
Skalenfaktorb.

Bewerten
$f(x) = x^a$

abgeleitete
S.-K.

Berechnen des
ggT pro SFB

## Fig. 2

**20**

sf=g(Cod.-Ver.-
Sk.-faktor)

## Fig. 3

EP 1 277 346 B1

Fig. 4

Fig. 5

61 62 63 64 65 66

| Umsetzen | → | |x| | → | Codierer-Verstärk-faktor | → | Kompri-mieren $f(x)=x^a$ | → | Auf- bzw. Abrunden | → | ⊗ | → |

60

sign(x)

## Fig. 6

67 68 69

| Dekomprimieren $f^{INV}(x)=x^{1/a}$ | → | Decodierer Verst.-fakt. | → | Umsetzen |

## Fig. 7

**71**

**70**

Audio
Eingang → | Analyse
Filterbank | → | Quantisierung
& Codierung | → | Bitstrom
Multiplexer | → Bitstrom
Ausgang

**73**  **74**  **75**

| Psychoakust.
Modell |

**72**

## Fig. 8 (Stand der Technik)

**81**

**80**

Bitstrom
Eingang → | Bitstrom
Demultiplexer | → | Inverse
Quantisierung | → | Synthese-
Filterbank | → Audio
Ausgang

**82**  **83**  **84**

## Fig. 9 (Stand der Technik)